# EUROPÄISCHE PATENTANMELDUNG

(11) **EP 2 926 644 A1**
(43) Veröffentlichungstag der Anmeldung: **07.10.2015**
(21) Anmeldenummer: 14193758.1
(22) Anmeldetag: 18.11.2014
(51) Int. Cl.: A01D 45/00

(54) **VORRICHTUNG UND VERFAHREN ZUM ERNTEN VON FELDFRÜCHTEN**

(30) Priorität: 02.04.2014 DE 102014104669; 24.06.2014 DE 102014108812
(71) Anmelder: Strauß, Jörn, 21614 Buxtehude (DE)
(72) Erfinder: Strauß, Jörn, 21614 Buxtehude (DE); Allers Sebastian, 21614 Buxtehude (DE)
(74) Vertreter: RGTH

(57) **Zusammenfassung**

Eine Erntevorrichtung zum Ernten von in Reihen (101) angebauten Feldfrüchten (102), bevorzugt stangenförmigem Gemüse, besonders bevorzugt Spargel, ist einfach und kostengünstig aufgebaut, leistungsfähig, wirtschaftlich und flexibel einsetzbar und ermöglicht einfache Arbeitsabläufe. An einem Zentralbereich (103;203) der Vorrichtung (100;200) ist wenigstens eine seitlich vorstehende, eine bestimmte, eine Erntebreite (107) bildende Anzahl der Reihen überspannende Querfördereinrichtung (104,105;204,205) angeordnet. Der Zentralbereich umfasst wenigstens eine, bevorzugt automatisierte, Weiterverarbeitungsvorrichtung (110;210) zum Konfektionieren der Feldfrüchte. Die Weiterverarbeitungsvorrichtung enthält wenigstens eine, bevorzugt automatisierte, Wasch- und/oder Schneide- und/oder Sortier- und/oder Verpackungseinrichtung (111,114,115,116;211,215,216), bevorzugt eine, insbesondere automatisierte, wahlweise ein- oder zweistufige Wascheinrichtung. Die wenigstens eine Querfördereinrichtung ist zum Transportieren der Feldfrüchte zu der wenigstens einen Weiterverarbeitungsvorrichtung ausgebildet. Ein Verfahren zum Ernten von Feldfrüchten mit dieser Vorrichtung wird vorgeschlagen.

## Beschreibung

Die Erfindung betrifft eine Vorrichtung zum Ernten von im Wesentlichen in Reihen angebauten Feldfrüchten. Die Erfindung betrifft ferner ein Verfahren zum Ernten von im Wesentlichen in Reihen angebauten Feldfrüchten mit einer derartigen Vorrichtung.

### Stand der Technik

Aus der Druckschrift EP 0 054 569 B1 ist ein System zum Ernten von Feldfrüchten bekannt. Bei diesem System sind mehrere Lastwagen vorgesehen, ein sogenannter Ernte-Lastwagen und ein oder mehrere Transport-Lastwagen. Das System ist insbesondere zum Ernten von Wassermelonen ausgebildet, wobei das System auch zum Ernten anderer Feldfrüchte grundsätzlich geeignet sein soll, wie beispielsweise Tomaten.

Der Ernte-Lastwagen ist dafür ausgelegt, entlang verschiedener Reihen durch Felder zu fahren. Er weist seitlich nach außen um je eine im Wesentlichen senkrechte Achse wegklappbare Arme mit Förderbändern auf, auf die die geernteten Wassermelonen von den Feldarbeitern aufgelegt werden. Die Feldfrüchte werden mit dem Förderband des Arms zum Ernte-Lastwagen hin transportiert und dort über eine Hebevorrichtung zu auf dem Ernte-Lastwagen angeordneten Sortierbändern angehoben bzw. transportiert. Von den Sortierbändern werden die geernteten Wassermelonen von auf dem Ernte-Lastwagen befindlichen Arbeitern in auf dem Ernte-Lastwagen angeordneten Behältern verstaut. Ferner sind Fördereinrichtungen vorgesehen, mit denen die gefüllten Behälter vom Ernte-Lastwagen auf die Transport-Lastwagen transportiert werden können.

Somit ist aus der Druckschrift EP 0 054 569 B1 das Prinzip, dass ein selbstfahrendes Fahrzeug seitlich abstehende Arme mit Förderbändern aufweist, auf die Feldfrüchte von Feldarbeitern gelegt und zum Wagen hin transportiert werden können, für das Ernten von Wassermelonen und Tomaten bekannt.

Die Druckschrift US 3,636,687 A offenbart eine vollautomatische Erntemaschine für- insbesondere grünen - Spargel, bei der rotierende Messer vorgesehen sind, die ins Erdreich eindringen und die Spargelstangen schneiden. Dabei sind insgesamt drei parallel zueinander angeordnete Vorrichtungen mit rotierenden Messern vorgesehen, die jeweils über einen Spargeldamm verfahrbar sind, sodass der selbstfahrende vollautomatische Spargelernter gleichzeitig drei Dämme abernten kann. Die automatisch geschnittenen Spargelstangen werden von der Schneidevorrichtung auf ein in Fahrtrichtung verlaufendes Förderband aufgebracht, von wo der Spargel zu einem sich anschließenden, quer verlaufenden Förderband gebracht wird. Dieses Förderband endet mittig in der Maschine bei einem Drehtisch, auf den der Spargel aufgebracht wird. Eine auf der Maschine sitzende Bedienperson kann die Spargelstangen vom Drehtisch nehmen und in dafür vorgesehene Behälter einbringen, in denen sie zur Aufbereitung für eine Vermarktung von der Erntemaschine genommen werden können. Eine derartige Aufbereitung erfolgt nicht auf der Erntemaschine.

Die Druckschrift US 6,981,357 B2 zeigt eine Erntemaschine zum halbautomatischen Ernten von Pflanzen, die Früchte oder Gemüse tragen, insbesondere von Erdbeeren. Hierbei ist ein Fahrzeug vorgesehen, das längst der Reihen der Pflanzen verfahrbar ist, wobei im vorderen Bereich des Fahrzeugs von dem Fahrzeug vorstehende, seitlich verschwenkbare Förderbänder vorgesehen sind. Im ausgeklappten Zustand überspannen diese Förderbänder seitlich mehrere Reihen. Arbeiter, die hinter der Erntemaschine herlaufen, können gepflückte Erdbeeren auf das Förderband legen, wodurch die Erdbeeren zu einer zentralen Plattform auf der Erntemaschine verfahren werden. Auf der Plattform sind verschiedene Arbeitsstationen für Arbeiter vorgesehen, die die geernteten Erdbeeren in Behälter einpacken können. Diese Behälter können auf Paletten gepackt und mittels eines Palettentransportsystems seitlich verfahren werden. Die Druckschrift US 6,981,357 B2 offenbart ferner, dass die Reifen des Fahrzeuges um 90° gedreht werden können, damit das Fahrzeug am Ende einer Reihe zur nächsten parallelen Reihe verfahren werden kann. Eine weitere Bearbeitung der gepflückten Erdbeeren erfolgt an Bord des Fahrzeuges nicht.

### Darstellung der Erfindung: Aufgabe, Lösung, Vorteile

Die Erfindung hat die Aufgabe, eine Erntevorrichtung bzw. -maschine zu schaffen, die einfacher und kostengünstiger aufgebaut, wirtschaftlicher und flexibler einsetzbar sowie leistungsfähiger ist und eine einfache Handhabung, d.h. einfache Arbeitsabläufe, ermöglicht. Die Erfindung hat weiterhin die Aufgabe, ein Verfahren zu schaffen, einen Erntevorgang mit einer derartigen Erntevorrichtung bzw. -maschine einfacher, wirtschaftlicher, flexibler und leistungsfähiger zu gestalten und damit eine einfache Handhabung, d.h. einfache Arbeitsabläufe, zu ermöglichen.

Diese Aufgabe wird gelöst durch eine Vorrichtung zum Ernten von zumindest im Wesentlichen in Reihen angebauten Feldfrüchten, bevorzugt von stangenförmigem Gemüse, besonders bevorzugt von Spargel, umfassend einen Zentralbereich, an dem wenigstens eine seitlich vorstehende, eine bestimmte, eine Erntebreite bildende Anzahl der Reihen überspannende, zum darauf Ablegen und zum Zentralbereich Fördern der von Erntearbeitern geernteten Feldfrüchte vorgesehene, insbesondere motorisch betriebene Querfördereinrichtung angeordnet ist, wobei der Zentralbereich wenigstens eine, bevorzugt automatisierte, Weiterverarbeitungsvorrichtung zum, bevorzugt automatischen, Konfektionieren der Feldfrüchte umfasst, wobei die Weiterverarbeitungsvorrichtung wenigstens eine, bevorzugt automatisierte, besonders bevorzugt vollautomatisierte, Wasch- und/oder Schneide- und/oder Sortier- und/oder Verpackungseinrichtung, dabei bevorzugt eine, insbesondere automatisierte, wahlweise ein- oder zweistufige, besonders bevorzugt einstufige Wascheinrichtung, enthält, und wobei die wenigstens eine Querfördereinrichtung zum Transportieren der Feldfrüchte zu der wenigstens einen, bevorzugt automatisierten, Weiterverarbeitungsvorrichtung ausgebildet ist.

Die erfindungsgemäße Vorrichtung ist dazu ausgebildet, Feldfrüchte von einem Feld zu ernten, auf dem diese im Wesentlichen in Reihen angebaut sind. Dadurch ist ein kontinuierlicher Erntevorgang während eines Abfahrens der Reihen durch die Vorrichtung möglich. Bei einem solchen Feld handelt es sich bevorzugt um eine Anlage im Freien, d.h. im Freiland, jedoch kann die erfindungsgemäße Vorrichtung ohne weiteres auch in geschlossenen, z.B. überdachten Kulturen von Feldfrüchten eingesetzt werden, wie z.B. in Gewächshäusern oder dergleichen.

Die Erntebreite umfasst eine bestimmbare bzw. wählbare Anzahl von Reihen der Feldfrüchte. Diese Anzahl ist bei der erfindungsgemäßen Vorrichtung gemäß den individuellen Gegebenheiten und Erfordernissen des abzuerntenden Feldes wählbar, wie nachstehend noch näher erläutert wird. Nach der durch die individuellen Gegebenheiten und Erfordernisse des abzuerntenden Feldes, z.B. Abmessungen des Feldes und/oder Abmessungen und/oder Anzahl der Reihen der Feldfrüchte, aber auch nach der Anzahl der verfügbaren Erntearbeiter, wird vorteilhaft insbesondere eine Dimensionierung der wenigstens einen Querfördereinrichtung bestimmt. Dies betrifft bevorzugt die Anzahl der Reihen der Feldfrüchte. Vorteilhaft werden drei bis 15 Reihen überspannt, besonders vorteilhaft drei bis 11 Reihen, insbesondere bevorzugt fünf bis neun Reihen, ganz besonders bevorzugt fünf bis sieben Reihen. Durch die Variationsmöglichkeit ist eine flexible Anpassung auch an die Größe der Landwirtschafts- oder Gartenbaubetriebe möglich, von denen die erfindungsgemäße Vorrichtung eingesetzt wird. Damit ist die erfindungsgemäße Vorrichtung sehr günstig auch in Betrieben einsetzbar, die mehrere kleine Felder bewirtschaften, bei denen somit zwar der Einsatz der Vorrichtung an der Gesamtgröße der Anbaufläche gemessen lohnend ist, für die jedoch eine große Erntebreite von z.B. 15 Reihen nicht geeignet ist. Darüber hinaus können weitere Dimensionierungs- bzw. Anpassungsmöglichkeiten bzw. -mittel vorgesehen sein, z.B. solche, die eine Anpassung an eine Wuchshöhe der Feldfrüchte und/oder Arbeitshöhe der Erntearbeiter gestatten.

Als weiteres Merkmal der erfindungsgemäßen Vorrichtung ist wenigstens eine, bevorzugt automatisierte, Weiterverarbeitungsvorrichtung an Bord dieser Vorrichtung vorgesehen, zu der das Erntegut, d.h. die geernteten Feldfrüchte, mittels der wenigstens einen Querfördereinrichtung, die z.B. mit einem oder mehreren Förderbändern ausgebildet ist, transportiert wird. Bevorzugt erfolgen alle in dieser Weiterverarbeitungsvorrichtung vorgesehenen und/oder zusammengefassten Bearbeitungsvorgänge für das Erntegut automatisch, besonders bevorzugt vollautomatisch. Als solche Bearbeitungsvorgänge sind einzeln oder in Kombination vorgesehen: Waschen der Feldfrüchte, wodurch insbesondere Erdreste bzw. -spuren von den Feldfrüchten entfernt werden und die Feldfrüchte gegen Welken oder Austrocknen geschützt sowie ggf. auch gekühlt werden können, Schneiden der Feldfrüchte auf verkaufsgerechte Abmessungen, z.B. Längen, Sortieren der Feldfrüchte nach einem oder mehreren Sortierungskriterien, wie z.B. Dickenabmessungen, sowie Verpacken in Verkaufsverpackungen und/oder Transportbehältnisse, z.B. Schachteln, Bunde, Kästen. In einer Abwandlung können einzelne der Bearbeitungsvorgänge oder im Grenzfall auch alle Bearbeitungsvorgänge von Hand ausführbar sein, wie z.B. das Waschen oder das Sortieren oder das Verpacken in Transportbehältnisse. Alle diese Bearbeitungsvorgänge, einzeln oder in Kombination, sind zusammengefasst als Konfektionieren der Feldfrüchte bezeichnet. Mit zunehmendem Grad der Automatisierung der Weiterverarbeitungsvorrichtung können dabei Leistungsfähigkeit und Bedienungskomfort der erfindungsgemäßen Vorrichtung gesteigert werden, wohingegen bei einer Auslegung der Bearbeitungsvorgänge für eine Ausführung von Hand die entsprechend dafür vorgesehenen Einrichtungen, insbesondere Wasch- und/oder Sortier- und/oder Verpackungseinrichtung, vereinfacht und kostengünstig herstellbar sind.

Die erfindungsgemäße Vorrichtung ist bevorzugt einsetzbar für stangenförmige Feldfrüchte, besonders stangenförmige Gemüse, davon insbesondere Spargel, wobei sowohl grüner als auch weißer Spargel in gleich vorteilhafter Weise geerntet und bearbeitet werden können.

Der Erfindung liegt die Erkenntnis zugrunde, dass eine vollautomatische Erntemaschine, wie sie die Druckschrift US 3,636,687 A zeigt, einen hohen Konstruktions-, Betriebs- und Kostenaufwand erfordert und zudem die Gefahr der Beschädigung der Feldfrüchte beim Erntevorgang groß ist. In der geringen Erntebreite, wie sie in der Druckschrift US 3,636,687 A dargestellt ist, wird trotz der Automatisierung des Erntevorgangs nur eine verhältnismäßig geringe Menge an Feldfrüchten geerntet, und durch die Notwendigkeit, das Feld mit den Feldfrüchten entsprechend häufig abzufahren, ergibt sich eine Vergrößerung des Zeitaufwandes für die Ernte und entstehen auch höhere Betriebskosten für die Erntemaschine.

Das Konzept der erfindungsgemäßen Vorrichtung geht daher von demjenigen aus, wie es in den Druckschriften EP 0 054 569 B1 und US 6,981,357 B2 gezeigt ist, wonach seitlich von einem Erntefahrzeug vorstehende Förderbänder vorgesehen sind, auf die Erntearbeiter das Erntegut, d.h. die händisch geernteten Feldfrüchte, legen können, und kombiniert dieses Konzept mit einer Weiterverarbeitungsvorrichtung, bei der im Gegensatz zum händischen Ernten durch die Erntearbeiter der Automatisierungsgrad für die Weiterverarbeitung des Ernteguts bis hin zu dessen Abtransport bevorzugt möglichst hoch getrieben ist, wahlweise jedoch auch hier die Möglichkeit zum händischen Ausführen der Weiterverarbeitung oder einzelner ihrer Teilvorgänge besteht. Die Erfindung kombiniert so in vorteilhafter Weise die Ausgestaltungen für Handarbeit und zu einer möglichen Automatisierung dort, wo diese Arbeitsverfahren, insbesondere diese unterschiedlichen Arbeitsverfahren, ihre Stärken und Vorteile aufweisen. Insbesondere sind der Vorteil der höheren Flexibilität, der einfachen Ausführbarkeit und der schonenderen Behandlung der Feldfrüchte beim händischen Ernten mit dem Vorteil der leistungsfähigeren, im hohen Maße arbeitssparenden automatischen Weiterverarbeitung der Feldfrüchte vom Fördern ab Ernteort bis hin zum Abtransport des konfektionierten Ernteguts auf vorteilhafte Weise kombinierbar und lassen sich so die Nachteile des maschinellen Erntens und eines händischen Weiterverarbeitens vermeiden. Dabei bleibt die erfindungsgemäße Vorrichtung durch die Wahlmöglichkeit zwischen händischen, automatisierten oder auch vollautomatisch funktionierenden Weiterverarbeitungsvorrichtungen bzw. -schritten in hohem Maße flexibel gestaltbar und einsetzbar und somit auch sehr unterschiedlichen Anforderungen der Landwirtschafts- oder Gartenbaubetriebe anpassbar und gewachsen. Im Resultat ergibt sich eine einfache und zugleich leistungsfähige, arbeitssparend bedienbare und kostengünstige Vorrichtung, mit der die Feldfrüchte wirtschaftlich und mit hoher Qualität, insbesondere schonend, schnell und frisch, geerntet werden.

Vorteilhafte Ausgestaltungen der Erfindung sind in den Unteransprüchen gekennzeichnet.

Gemäß einer bevorzugten Weiterbildung der erfindungsgemäßen Vorrichtung ist die Weiterverarbeitungsvorrichtung mit einer wenigstens eine Hauptwascheinheit umfassenden Wascheinrichtung ausgebildet, wobei die wenigstens eine Hauptwascheinheit ausgestaltet ist mit wenigstens einer insbesondere vollautomatischen Waschfördereinrichtung zum Fördern der Feldfrüchte in einer Förderrichtung durch die wenigstens eine Hauptwascheinheit und mit wenigstens einer insbesondere wenigstens eine Sprühdüse umfassenden Sprüheinrichtung zum Reinigen der Feldfrüchte durch Absprühen mit einer Waschflüssigkeit, insbesondere Wasser, aus wenigstens einer Richtung, insbesondere von oben und/oder unten, in Bezug auf die Förderrichtung der wenigstens einen Waschfördereinrichtung, und wobei die Wascheinrichtung wahlweise zweistufig mit weiterhin einer Vorwascheinheit ausgebildet ist.

Dabei befindet sich die wahlweise vorgesehene, wenigstens eine Vorwascheinheit bezüglich der durch die wenigstens eine Waschfördereinrichtung vorgenommenen Förderrichtung, in der das Erntegut, d.h. die geernteten Feldfrüchte, durch die Weiterverarbeitungsvorrichtung gefördert wird, vor der wenigstens einen Hauptwascheinheit.

Die wahlweise vorgesehene, wenigstens eine Vorwascheinheit ist vorteilhaft mit einem trogartigen Behältnis ausgestaltet, welches mit Waschflüssigkeit, bevorzugt mit reinem, d.h. von Zusätzen freiem Wasser, befüllbar ist. Dieses Behältnis bildet somit insbesondere ein Wasserbad und ist so gestaltet, dass im Betrieb die von der wenigstens einen Querfördereinrichtung, die bevorzugt mit wenigstens einem Förderband, einer Förderkette oder dergleichen ausgestaltet ist, zum Zentralbereich geförderten und darin der wenigstens einen Vorwascheinheit zugeführten Feldfrüchte in die Waschflüssigkeit fallen. Die wenigstens eine Vorwascheinheit ist bevorzugt dazu vorgesehen, dass sich dort wenigstens der grobe Schmutz, insbesondere dem Erntegut anhaftende Erdreste oder -spuren, löst und in der wenigstens einen Vorwascheinheit sedimentieren kann. In dieser Ausgestaltung ist die wenigstens eine Vorwascheinheit als passive Wascheinheit und wahlweise zugleich als Auffang- und Zwischenspeicherbehälter für das Erntegut ausgebildet.

Trotz dieser Vorteile der Vorwascheinheit ist in einer besonders bevorzugten Ausgestaltung die Wascheinrichtung der erfindungsgemäßen Vorrichtung ohne eine solche Vorwascheinheit, d.h. nur mit der wenigstens einen Hauptwascheinheit, ausgebildet, wodurch insbesondere Platz und Gewicht eingespart werden können. Außerdem ist bei dieser Ausgestaltung eine Entnahmeund/oder Vereinzelungseinrichtung zum Fördern der Feldfrüchte aus der Vorwascheinheit auf die wenigstens eine Waschfördereinrichtung nicht erforderlich. Besonders bevorzugt ist bei dieser Ausgestaltung wenigstens eine Übergabeeinrichtung zum Fördern des Ernteguts, d.h. der Feldfrüchte, von der wenigstens einen Querfördereinrichtung auf die wenigstens eine Waschfördereinrichtung vorgesehen, die an die Stelle der wenigstens einen Vorwascheinheit tritt. Die wenigstens eine Übergabeeinrichtung ist in einer Weiterbildung vorteilhaft mit wenigstens einer Förderkurve, insbesondere wenigstens einer 90°-Förderkurve, ausgestaltet. Die wenigstens eine Übergabeeinrichtung umfasst dabei vorteilhaft auch Mittel zum Ändern einer Ausrichtung der Feldfrüchte, so dass die Feldfrüchte gegenüber einer Förderrichtung der wenigstens einen Querfördereinrichtung einerseits und gegenüber der wenigstens einen Waschfördereinrichtung andererseits stets in derselben Weise, z.B. wenigstens nahezu rechtwinklig, ausgerichtet sind. Die Mittel zum Ändern einer Ausrichtung der Feldfrüchte sind bevorzugt durch die wenigstens eine Förderkurve gebildet. Auch, wenn die wenigstens eine Querfördereinrichtung und die wenigstens eine Waschfördereinrichtung unterschiedliche Förderrichtungen aufweisen, die Feldfrüchte somit bei der Übergabe durch die wenigstens eine Übergabeeinrichtung eine Änderung der Förderrichtung und/oder ihrer Ausrichtung durchlaufen müssen, wird so ein einwandfreies Fördern der Feldfrüchte auch dann gewährleistet, wenn die Feldfrüchte in einer vorgegebenen Ausrichtung gegenüber der Förderrichtung gefördert werden müssen. Weiter bevorzugt kann die wenigstens eine Übergabeeinrichtung auch mit wenigstens einer Zwischenspeichereinrichtung für die Feldfrüchte ausgebildet sein.

Das optional auf diese Weise vorgereinigte Erntegut ist dann für weitere Bearbeitungsschritte bereit. Als einer dieser Bearbeitungsschritte ist ein Hauptwaschen vorgesehen, wozu die Weiterverarbeitungsvorrichtung mit der wenigstens einen Hauptwascheinheit ausgestaltet ist. Von der wenigstens einen Querfördereinrichtung, d.h. wahlweise von der wenigstens einen Vorwascheinheit und besonders bevorzugt von der wenigstens einen Übergabeeinrichtung zur und durch die Hauptwascheinheit erstreckt sich die wenigstens eine insbesondere vollautomatischen Waschfördereinrichtung zum Fördern der Feldfrüchte in einer Förderrichtung durch die wenigstens eine Hauptwascheinheit, bei der es sich bevorzugt um eine aktive Wascheinheit handelt, in der das Erntegut mit der Waschflüssigkeit abgesprüht bzw. abgespritzt wird. Zur Steigerung der Reinigungswirkung sind für das Abspritzen bevorzugt mehrere Sprühdüsen vorgesehen, durch die das Erntegut von mehreren Seiten abspritzbar ist, bevorzugt außer von oben auch von unten, bezogen auf die Förderrichtung der wenigstens einen insbesondere vollautomatischen Waschfördereinrichtung. Dazu ist die wenigstens eine insbesondere vollautomatische Waschfördereinrichtung bevorzugt mit wenigstens einem netz- und/oder gitterartig ausgebildeten Förderband und/oder wenigstens einer Förderkette oder dergleichen ausgeführt, so dass die Waschflüssigkeit von allen Seiten auf das Erntegut treffen kann.

Vorteilhaft ist die Wascheinrichtung für ein vollautomatisches Waschen eingerichtet, bei dem jede händische Zwischenbehandlung, d.h. Handarbeit einer Bedienperson, entfällt. Dies beinhaltet z.B. auch eine mechanisierte Entnahme des Erteguts aus der wahlweise vorgesehenen Vorwascheinheit, wozu eine Entnahme- und/oder Vereinzelungseinrichtung an sich bekannter Art vorgesehen ist, oder es beinhaltet in einer Abwandlung ein geführtes Fördern des Ernteguts durch die wahlweise vorgesehene Vorwascheinheit, so dass eine von der wenigstens einen Querfördereinrichtung vorgegebene Ausrichtung der Feldfrüchte in der Weiterverarbeitungsvorrichtung für eine nachfolgende Bearbeitung, wie insbesondere Schneiden, Hauptwaschen, Sortieren, Verpacken, auf dem gesamten Durchlauf des Ernteguts durch die Weiterverarbeitungsvorrichtung erhalten bleibt. Bevorzugt wird jedoch dieses geführte Fördern des Ernteguts durch die Übergabeeinrichtung bewirkt. Dies ermöglicht ein beschädigungssicheres, störungsfreies, schnelles, schonendes und einfaches Behandeln des Ernteguts.

Bevorzugt ist ferner ein Vorratsbehälter für die Waschflüssigkeit, insbesondere ein Wassertank, vorgesehen. Insbesondere ist dieser Vorratsbehälter in einen außerdem eine Pumpeinrichtung umfassenden Pumpenkreislauf einbezogen, durch welchen den Sprühdüsen Waschflüssigkeit zuführbar ist. Außerdem dient der Vorratsbehälter vorteilhaft zum Aufnehmen aus der Hauptwascheinheit rückfließender Waschflüssigkeit und kann Einrichtungen zu deren Reinigung, z.B. eine Filtereinrichtung und/oder eine Sedimentierungseinrichtung, sowie Vorrichtungen zur Entnahme des gefilterten bzw. sedimentierten Schmutzes, insbesondere der Erdreste, z.B. in der Art einer Abschlammeinrichtung, umfassen. Auch kann die wahlweise vorgesehene Vorwascheinheit aus dem Vorratsbehälter nachspeisbar sein. Auf diese Weise wird ein Kreislauf für die Waschflüssigkeit gebildet, der einerseits einen sparsamen Verbrauch von Waschflüssigkeit, andererseits aber deren hygienischen Zustand ermöglicht. Auf der Vorrichtung muss daher nur ein geringer Vorrat an Waschflüssigkeit mitgeführt werden, wodurch Gewicht gespart wird.

Bei einer weiteren bevorzugten Ausführungsform der erfindungsgemäßen Vorrichtung ist die Weiterverarbeitungsvorrichtung ausgebildet zum, insbesondere in dieser Reihenfolge, Konfektionieren der Feldfrüchte, insbesondere des stangenförmigen Gemüses, mit
- wahlweise der wenigstens einen Vorwascheinheit zum Vorwaschen oder wenigstens einer Übergabeeinrichtung der vorstehend beschriebenen Art zum Fördern der Feldfrüchte von der wenigstens einen Querfördereinrichtung auf die wenigstens eine Waschfördereinrichtung, wobei die Übergabeeinrichtung Mittel zum Ändern der Förderrichtung und/oder einer Ausrichtung der Feldfrüchte von der wenigstens einen Querfördereinrichtung auf die wenigstens eine Waschfördereinrichtung aufweist,
- der wenigstens einen Schneideeinrichtung zum Schneiden,
- der wenigstens einen Hauptwascheinheit zum Hauptwaschen,
- der wenigstens einen Sortiereinrichtung zum Sortieren und
- bevorzugt der wenigstens einen Verpackungseinrichtung zum Verpacken.

Das wahlweise vorgenommene Voranstellen des Vorwaschens dient dabei einer Schonung der nachfolgenden wenigstens einen Schneideeinrichtung. Die Erdreste werden darin wenigstens grob entfernt, so dass eine Abnutzung der wenigstens einen Schneideeinrichtung vermindert wird. Damit erhöht sich die Standzeit der wenigstens einen Schneideeinrichtung und erlaubt längere Wartungsintervalle, wodurch sich die Kosten für den Betrieb der erfindungsgemäßen Vorrichtung verringern und deren Verfügbarkeit erhöht wird. Dies ermöglicht eine hohe Auslastung in der Erntesaison. Je nach zu erwartender, anfänglicher Verschmutzung der Feldfrüchte unmittelbar nach dem Erntevorgang, z.B. von Spargelstangen unmittelbar nach dem Stechen in dem Zustand, in dem sie von der wenigstens einen Querfördereinrichtung zugeführt werden, kann allerdings auf das Vorwaschen verzichtet werden, wodurch sich die erfindungsgemäße Vorrichtung einfacher und leichter ausbilden lässt.

Das vorerwähnte Schneiden der Feldfrüchte auf vorbestimmte, verkaufsgerechte Abmessungen, z.B. auf vorbestimmte, verkaufsgerechte Längen bei stangenförmigem Gemüse, z.B. Spargel, erfolgt bei der erfindungsgemäßen Vorrichtung -gegebenenfalls im Anschluss an das wahlweise vorgesehene Vorwaschen -vor dem in der wenigstens einen Hauptwascheinheit vorgenommenen Hauptwaschen. Dies hat den Vorteil, dass der beim Schneiden entstehende Abfall, z.B. der Verschnitt des stangenförmigen Gemüses - bei einer bevorzugten Ausgestaltung bzw. Verwendung der Vorrichtung: der Spargelschnitt, nicht mitgewaschen werden muss. Außerdem werden bei dieser Reihenfolge der Weiterverarbeitung auch die Schnittflächen während des Hauptwaschens gesäubert, so dass das Erntegut vollständig gereinigt in die Sortierung und Verpackung gefördert wird.

Durch das wahlweise vorgenommene Vorwaschen wird auch die wenigstens eine Hauptwascheinheit geschont und deren Reinigungswirkung verbessert, da in dieser weniger Schmutz anfällt, die Waschflüssigkeit also länger sauber bleibt und daher die Feldfrüchte besser reinigt. Dies ist insbesondere dann vorteilhaft, wenn die wenigstens eine Hauptwascheinheit als aktive Wascheinheit mit wenigstens einer Sprühdüse ausgebildet ist. Durch die Verminderung der Menge anfallenden Schmutzes werden die Abnutzung der Sprühdüsen und die Verstopfungsgefahr verringert, wodurch sich weiterhin der Reinigungs- und Wartungsaufwand für die wenigstens eine Hauptwascheinheit vermindert.

Gemäß den vorstehenden Ausführungen ist bei der erfindungsgemäßen Vorrichtung besonders bevorzugt ein vollautomatisches Waschen, Schneiden, Sortieren und wahlweise Verpacken vorgesehen. Dazu ist es besonders vorteilhaft, dass sich die wenigstens eine Waschfördereinrichtung durchgehend bevorzugt von der wenigstens einen Querfördereinrichtung, d.h. wahlweise von der wenigstens einen Vorwascheinheit und besonders bevorzugt von der wenigstens einen Übergabeeinrichtung durch wenigstens die wenigstens eine Schneideeinrichtung und die wenigstens eine Hauptwascheinheit bis in die wenigstens eine Sortiereinrichtung erstreckt. Dies ermöglicht ein geführtes Fördern der Feldfrüchte auf einfache Weise. Dabei bleibt die räumliche Ausrichtung der Feldfrüchte insbesondere in der wenigstens einen Schneideeinrichtung, der wenigstens einen Hauptwascheinheit und der wenigstens einen Sortiereinrichtung, weiter bevorzugt aber auch in der wenigstens einen Verpackungseinrichtung, erhalten, wodurch ein schnelles, präzises, störungsfreies und einfaches Weiterverarbeiten der Feldfrüchte ermöglicht wird.

Vorteilhaft ist die wenigstens eine Schneideeinrichtung ferner mit wenigstens einer Auswerfeinrichtung für die beim Schneiden entstehenden Abfälle, z.B. unbrauchbare Spargelreste und dergleichen, ausgebildet. Durch die wenigstens eine Auswerfeinrichtung werden die Abfälle der Feldfrüchte aufs Feld zurückgefördert; insbesondere ist die wenigstens eine Auswerfeinrichtung derart ausgebildet, dass die Abfälle aus der wenigstens einen Schneideeinrichtung durch Schwerkraft einfach auf das Feld zurückfallen.

Die wenigstens eine Sortiereinrichtung ist ebenfalls vorteilhaft als vollautomatische Sortiereinrichtung ausgebildet. Derartige, vollautomatische Sortiereinrichtungen sind als stationäre Anlagen im Prinzip bekannt. Darin werden die Feldfrüchte nach bestimmten Kriterien, wie Gewicht, Form oder Abmessungen, vorzugsweise in unterschiedliche Behältnisse geführt. Eine solche Sortiereinrichtung enthält daher Sensormittel zum Detektieren der genannten Kriterien, wie z.B. wenigstens eine Wiegeeinrichtung oder wenigstens ein optisches Erkennungsmittel zum Erfassen einer oder mehrerer bestimmter Abmessungen der Feldfrüchte, z.B. einen Durchmesser bei stangenförmigem Gemüse, oder zum Detektieren der Farbe der Feldfrüchte oder dergleichen. Eine derartig ausgebildete vollautomatische Sortiereinrichtung umfasst weiterhin eine Steuerung und automatische Entnahmemittel bzw. Lenkmittel, um die vermessenen bzw. durch die Erkennungsmittel erfassten und einer vorbestimmbaren Sortierklasse zugeordneten Feldfrüchte bevorzugt gemeinsam, z.B. in entsprechend zugeordnete Behältnisse, zu lenken und dort zu sammeln und der wenigstens einen Verpackungseinrichtung zuzuleiten. Derartige Entnahmemittel bzw. Lenkmittel sind z.B. mit Aufnahmeschalen für die Feldfrüchte und Kippeinrichtungen zum Kippen der einzelnen Aufnahmeschalen und Entleeren in die den Sortierklassen zugeordneten Behältnisse ausgestaltet.

Die wenigstens eine Sortiereinrichtung kann vorteilhaft mit einer weiteren Auswerfeinrichtung ausgebildet sein, sofern je nach Art und Beschaffenheit der geernteten Feldfrüchte auch nach dem händischen Ernten und der voraufgehenden Weiterbearbeitung noch damit gerechnet werden muss, dass bei der Sortierung nach den jeweiligen, der Sortierung zugrundeliegenden Kriterien Feldfrüchte anfallen, die als nicht verwertbar auszusondern sind. Diese weitere Auswerfeinrichtung ist vorteilhaft ebenfalls dazu ausgebildet, die nicht verwertbaren Feldfrüchte auf das Feld zurück zu fördern. Grundsätzlich kann in einer Abwandlung auch ein getrenntes Sammeln und Kompostieren der Abfälle und/oder der nicht verwertbaren Feldfrüchte vorgenommen werden.

In einer anderen Abwandlung ist zusätzlich zur oder anstelle der automatischen, bevorzugt vollautomatischen, Sortiereinrichtung eine händische Sortierung der Feldfrüchte vorgesehen. Diese ermöglicht insbesondere eine händische Vorsortierung der Feldfrüchte durch mitfahrendes Bedienpersonal, bevorzugt ein bis zwei Personen. Dazu kann die Sortiereinrichtung mit einer Fördereinrichtung, insbesondere einem Förderband, die besonders bevorzugt Teil der wenigstens einen Waschfördereinrichtung bildet, und einer Anzahl von Sortiergefäßen ausgestaltet sein, in die die Feldfrüchte vom Bedienpersonal nach Aufnehmen von der Fördereinrichtung gelegt werden. Eine Einrichtung für ein automatisches Detektieren von Sortierkriterien und ein automatisches Lenken der Feldfrüchte ist dann nicht erforderlich. Eine gemäß dieser Abwandlung ausgestaltete Sortiereinrichtung für ein händisches Sortieren benötigt außer dem Bedienpersonal auch Platz für dieses im Zentralbereich der Vorrichtung sowie eine hinreichend dimensionierte Fördereinrichtung, z.B. ein Förderband von etwa zwei Metern Länge.

Auch die sich an die wenigstens eine Sortiereinrichtung wahlweise anschließende, wenigstens eine Verpackungseinrichtung ist vorteilhaft vollautomatisch ausgestaltet. Wie vorstehend angegeben erfolgt darin ein bevorzugt vollautomatisches Verpacken der sortierten Feldfrüchte in Verkaufsverpackungen und/oder Transportbehältnisse, z.B. Schachteln, Bunde, Kästen. Alternativ ist auch eine Verpackungsstation für ein händisches Verpacken möglich, wodurch zwar die wenigstens eine Verpackungseinrichtung in ihrem Aufbau vereinfacht wird, jedoch ebenfalls einen größeren Personalaufwand und Platzbedarf erfordert.

Wahlweise zu den vorbeschriebenen, automatisierten und/oder vollautomatischen Einrichtungen zur Weiterverarbeitung der Feldfrüchte ist gemäß einer anderen vorteilhaften Ausführungsform der erfindungsgemäßen Vorrichtung die Weiterverarbeitungsvorrichtung ausgebildet zum Konfektionieren der Feldfrüchte, insbesondere des stangenförmigen Gemüses, mit, insbesondere in dieser Reihenfolge,
- wenigstens einer Sammeleinrichtung zum Sammeln der von der wenigstens einen Querfördereinrichtung geförderten Feldfrüchte und/oder Bereitstellen der Feldfrüchte an die Wasch- und/oder Sortier- und/oder Verpackungseinrichtung,
- der wenigstens einen Wascheinrichtung zum Waschen, insbesondere zum Hauptwaschen als einzigem Waschen,
- der wenigstens einen Sortiereinrichtung zum Sortieren und
- bevorzugt der wenigstens einen Verpackungseinrichtung zum Verpacken.

Diese Ausführungsform der erfindungsgemäßen Vorrichtung stellt nicht nur eine besonders einfach aufgebaute und kostengünstig herstellbare Variante dar, sondern ist in vorteilhafter Weise auch für eine händische Weiterverarbeitung der Feldfrüchte optimiert. So tritt insbesondere an die Stelle der vorbeschriebenen wenigstens einen Übergabeeinrichtung bzw. Vorwascheinheit wenigstens eine Sammeleinrichtung, in der lediglich ein Sammeln der von der wenigstens einen Querfördereinrichtung geförderten Feldfrüchte und/oder Bereitstellen der Feldfrüchte an die Wasch- und/oder Sortier- und/oder Verpackungseinrichtung erfolgt. Insbesondere ist die wenigstens eine Sammeleinrichtung für ein trockenes Sammeln der Feldfrüchte ausgebildet, d.h. sie wird ohne Waschflüssigkeit betrieben. In einer besonders einfachen Ausgestaltung umfasst eine derartige Sammeleinrichtung wenigstens ein Sammelbehältnis, in dem die von der wenigstens einen Querfördereinrichtung geförderten Feldfrüchte aufgefangen werden. Ein derartiges Sammelbehältnis kann fest angeordnet sein, ist bevorzugt aber abnehmbar in einer Halterung bzw. transportabel ausgebildet. Dies erlaubt eine größere Flexibilität in der Handhabung der gesammelten Feldfrüchte, aber z.B. auch eine erleichterte Reinigung der Sammeleinrichtung. Bevorzugt ist die wenigstens eine Sammeleinrichtung derart ausgebildet, dass die Feldfrüchte in einer Ausrichtung, in der sie von der wenigstens einen Querfördereinrichtung gefördert und der wenigstens einen Sammeleinrichtung zugeführt werden, in der wenigstens einen Sammeleinrichtung auch gesammelt und bereitgestellt werden. Dies erleichtert die Weiterverarbeitung der Feldfrüchte und ermöglicht eine schonende Behandlung der Feldfrüchte beim Sammeln und Weiterverarbeiten.

Auch die Ausgestaltung der wenigstens einen Wascheinrichtung zum Waschen, insbesondere zum Hauptwaschen als einzigem Waschen, bildet eine besonders kostengünstige Variante, die zwar nicht ausschließlich, aber vorzugsweise für ein einfaches, schnelles, händisches Waschen der Feldfrüchte ausgebildet ist. In einer besonders einfachen Form umfasst eine derartige Wascheinrichtung lediglich ein Waschflüssigkeit aufnehmendes Waschgefäß, insbesondere ein wannen-oder kastenförmiges Waschgefäß, in dem die Feldfrüchte durch einfaches Eintauchen per Hand abspülbar sind und dadurch sowohl gereinigt als auch gegen Austrocknen benetzt werden können. Andere, auch teil- oder vollautomatisiert ausgestaltete Wascheinrichtungen können ebenfalls wahlweise vorgesehen sein.

Als eine besonders einfache Ausführungsform der wenigstens einen Sortiereinrichtung kommt neben der vorbeschriebenen Gestaltung mit einer Fördereinrichtung und Sortiergefäßen auch eine Variante zum Einsatz, die unter Verzicht auf eine mechanisierte bzw. automatisierte Fördereinrichtung zumindest im Wesentlichen nur eine Anzahl Sortiergefäße umfasst, die bevorzugt in einer dazu angepasst ausgebildeten Halterung anordbar sind. Auch die wenigstens eine Verpackungseinrichtung ist in besonders einfacher Ausbildung auf ein Verpacken der Feldfrüchte insbesondere sortiert in Transportbehältnisse, vorzugsweise Kästen, beschränkt und in dieser Weise vorteilhaft mit der wenigstens einen Sortiereinrichtung kombiniert. Sortieren und Verpacken erfolgen dabei wenigstens teilweise zugleich; zum Abschluss des Verpackens kann sich ein Verbringen der gefüllten Sortiergefäße, die dann bevorzugt zugleich die Transportbehältnisse bilden, zum weiteren Transport z.B. auf Paletten oder dergleichen anschließen.

In der vorbeschriebenen, einfachen Ausführungsform der erfindungsgemäßen Vorrichtung wird der einfachen und kostengünstigen Ausbildung halber insbesondere auf eine Schneideeinrichtung verzichtet. Außerdem erfolgt ein Fördern der Feldfrüchte von der wenigstens einen Sammeleinrichtung zur wenigstens einen Wascheinrichtung und von dort zur wenigstens einen Verpackungseinrichtung ebenfalls durch händisches Weiterreichen.

In einer vorteilhaften Weiterbildung ist die erfindungsgemäße Vorrichtung gekennzeichnet durch eine nicht-selbstfahrende Ausbildung, insbesondere als Anbau- und/oder Anhängeeinrichtung zum Anbau und/oder Anhängen an ein Motorfahrzeug, bevorzugt ein Schleppfahrzeug, insbesondere einen landwirtschaftlichen Schlepper. Durch diese Weiterbildung in einfacher Ausgestaltung als Anhänger, bevorzugt als Aufsatz, Auflieger oderAnbaugerät an einem Ackerschlepper, wird vorteilhaft ein eigenes Antriebsaggregat auf der Vorrichtung eingespart, welches anderenfalls wenigstens zu deren Fortbewegung während des Erntevorgangs benötigt wird. Diese Weiterbildung macht sich die Tatsache zunutze, dass in den meisten der landwirtschaftlichen Betriebe, die Anbau der durch die erfindungsgemäße Vorrichtung zu erntenden Feldfrüchte betreiben, bereits ein Schleppfahrzeug, insbesondere ein landwirtschaftlicher Schlepper, zur Feldbestellung und für diverse Transportaufgaben vorhanden ist. Diese Schlepper weisen in der Regel eine oder mehrere Anhänge- und/oder Anbauvorrichtungen, insbesondere Geräteträger, für landwirtschaftliches Gerät auf, wie z.B. für Pflüge, Düngerstreuer, Drillmaschinen, Pflanzgeräte, Mähgeräte oder dergleichen. Je nach Ausbildung des Schleppfahrzeug sind diese Anhänge-und/oder Anbauvorrichtungen auch mit größeren Lasten beaufschlagbar, wie sie z.B. ein voll beladener Düngerstreuer darstellt, so dass einem Anbau oder Ankoppeln der erfindungsgemäßen Vorrichtung insoweit kein Hindernis entgegensteht.

Vorteilhaft ist die erfindungsgemäße Vorrichtung durch den Anbau bzw. das Ankoppeln an die Anhänge- und/oder Anbauvorrichtungen des Schleppers auch klappbar, insbesondere hochklappbar, angeordnet. Damit lässt sich ein Manövrieren des Schleppers mit angebauter bzw. angekoppelter Vorrichtung erleichtern, ein durch den Schlepper und die erfindungsgemäße Vorrichtung gebildeter Schleppzug erhält dadurch wenigstens nahezu die gleiche Wendigkeit wie der leerfahrende Schlepper. Dies ist von großem Vorteil beim Wenden auf einem Vorgewende eines abzuerntenden Feldes. Das Klappen, insbesondere Hochklappen, der Vorrichtung ist dabei nur soweit auszuführen, dass zwar eine Kollision mit den Reihen der Feldfrüchte, z.B. mit Spargeldämmen, sicher vermieden wird, es aber nicht zu Betriebsbeeinträchtigungen an der Vorrichtung, z.B. noch nicht zum Austreten von Waschflüssigkeit aus der wenigstens einen Wascheinrichtung oder zu betriebsstörender Verlagerung noch in der Vorrichtung befindlicher Feldfrüchte, kommen kann.

Bevorzugt weist die erfindungsgemäße Vorrichtung zum wenigstens teilweisen Entlasten des Schleppfahrzeugs ein eigenes Fahrwerk auf. Dieses ist jedoch in vorteilhafter Weise sehr einfach ausführbar. Insbesondere umfasst es lediglich ein oder zwei vorteilhaft lenkbare Stützräder, die insbesondere nahe einem hinteren, vom Schleppfahrzeug abgewandten Ende der erfindungsgemäßen Vorrichtung angeordnet und bevorzugt als Nachläufer ausgebildet sind, deren Laufrichtung sich nach Fahrtrichtung des Schleppfahrzeugs passiv einstellt. Dies ermöglicht auch bei Unebenheiten des Feldes eine ruhigere Fortbewegung der Vorrichtung, da ein Schwanken des Schleppfahrzeugs weniger stark auf die Vorrichtung übertragen wird. Weiter bevorzugt ist dieses Fahrwerk, bevorzugt die Stützräder, an der erfindungsgemäßen Vorrichtung einfahrbar bzw. anhebbar ausgebildet, so dass insbesondere nur das Fahrwerk zum Wenden des Schleppzugs eingefahren wird, ohne den Zentralbereich der Vorrichtung hochklappen zu müssen, wodurch die Betriebssicherheit erhöht wird.

Gemäß einer vorteilhaften Weiterbildung ist die erfindungsgemäße Vorrichtung gekennzeichnet durch eine Kopplungseinrichtung mit einer Energieabgabevorrichtung, vorzugsweise einer hydraulischen und/oder mechanischen Energieabgabevorrichtung, des Motorfahrzeugs, insbesondere eine Kopplungseinrichtung mit einem Hydraulikkreis und/oder einer Zapfwelle des Motorfahrzeugs, zum Übertragen von Antriebsenergie vom Motorfahrzeug wenigstens auf die Querfördereinrichtung und/oder die Weiterverarbeitungsvorrichtung. Damit wird vorteilhaft ein eigenes Antriebsaggregat auf der Vorrichtung, auch zum Betreiben insbesondere der wenigstens einen Querfördereinrichtung und der wenigstens einen automatisierten Weiterverarbeitungsvorrichtung, d.h. für die einzelnen von der Weiterbearbeitungsvorrichtung umfassten Bestandteile bzw. Baugruppen, z.B. die Waschfördereinrichtung, usw., eingespart.

Besonders vorteilhaft erfolgt dabei ein unmittelbarer Anschluss der von der erfindungsgemäßen Vorrichtung umfassten Bestandteile bzw. Baugruppen, d.h. insbesondere der wenigstens einen Querfördereinrichtung und der wenigstens einen automatisierten Weiterverarbeitungsvorrichtung, an einen oder mehrere Hydraulikanschlüsse des Schleppfahrzeugs, wahlweise auch an eine daran vorhandene Zapfwelle. Zur Ausbildung des direkten hydraulischen Anschlusses sind die von der erfindungsgemäßen Vorrichtung umfassten Bestandteile bzw. Baugruppen vorteilhaft hydraulisch betrieben. Ein derartiger direkter hydraulischer Anschluss spart die Ausstattung der erfindungsgemäßen Vorrichtung mit einer eigenen Hydraulikpumpe und ist noch universeller, leichter und einfacher gestaltbar als ein Anschluss an die Zapfwelle; damit ist ferner eine flexiblere Gestaltung von Antrieben auf der erfindungsgemäßen Vorrichtung möglich.

Gemäß einer anderen vorteilhaften Ausgestaltung ist die Kopplungseinrichtung wahlweise oder zusätzlich mit einer elektrischen Energieabgabevorrichtung, d.h. bevorzugt mit einem Anschluss an ein elektrisches Bordnetz des Schleppfahrzeugs, ausgebildet, so dass die von der erfindungsgemäßen Vorrichtung umfassten Bestandteile bzw. Baugruppen oder zumindest einige derselben auch unmittelbar elektrisch angetrieben werden können.

In Summe kann somit z.B. der vorgenannte motorische Antrieb der wenigstens einen Querfördereinrichtung wahlweise vom Motor des Motorfahrzeugs mechanisch über die Zapfwelle, über Hydraulikleitungen und wenigstens einen an der wenigstens einen Querfördereinrichtung angeordneten Hydraulikantrieb bzw. Hydraulikmotor oder elektrisch über das Bordnetz und wenigstens einen Elektromotor, aber auch durch eine Kombination dieser Antriebsarten vorgenommen werden.

Eine weitere bevorzugte Ausführungsform der erfindungsgemäßen Vorrichtung ist gekennzeichnet durch eine veränderbare, an die durch Erntebedingungen der Feldfrüchte beeinflusste Erntebreite anpassbare Längsabmessung der wenigstens einen Querfördereinrichtung. Insbesondere umfasst dabei die wenigstens eine Querfördereinrichtung zwei oder mehrere Teilfördereinrichtungen, die gegeneinander und/oder gegenüber dem Zentralbereich verschiebbar und/oder verschwenkbar ausgebildet sind. Die zwei oder mehreren, gegeneinander und/oder gegenüber dem Zentralbereich verschiebbaren Teilfördereinrichtungen sind weiterhin insbesondere im Wesentlichen längs einer Förderrichtung der wenigstens einen Querfördereinrichtung verschiebbar ausgebildet. Bei einer Verschwenkbarkeit der zwei oder mehreren Teilfördereinrichtungen gegeneinander und/oder gegenüber dem Zentralbereich ist diese insbesondere um wenigstens eine im Wesentlichen quer zur Förderrichtung der wenigstens einen Querfördereinrichtung verlaufende Drehachse ausgebildet. Besonders bevorzugt ist die Verschwenkbarkeit um eine bezüglich einer Betriebsstellung der wenigstens einen Querfördereinrichtung im Wesentlichen waagerechte und/oder senkrechte Drehachse ausgebildet. Weiter bevorzugt sind mechanische und/oder hydraulische Antriebsmittel zum Ausführen des Verschiebens und/oder Verschwenkens vorgesehen. Besonders bevorzugt sind die Teilfördereinrichtungen der verschiedenen Querfördereinrichtungen untereinander unterschiedlich verschiebbar und/oder verschwenkbar, so dass die einzelnen Querfördereinrichtungen unterschiedliche Anzahlen von Reihen von Feldfrüchten überspannen. Diese Anzahlen können auch während des Erntevorgangs verändert werden. In einem Extremfall kann dabei eine Querfördereinrichtung vollständig eingezogen, eingeklappt bzw. eingeschwenkt sein, so dass sie nicht betrieben wird, während zugleich eine andere Querfördereinrichtung auf eine Anzahl von Reihen von Feldfrüchten gemäß der gewünschten Erntebreite eingestellt ist, z.B. auch auf ihre maximal mögliche Längsabmessung oder die Hälfte davon. So kann die Erntebreite im Betrieb der erfindungsgemäßen Vorrichtung besonders individuell eingestellt werden.

Durch diese Maßnahmen wird vorteilhaft eine einfache Dimensionierung der wenigstens einen Querfördereinrichtung zur schnellen und unkomplizierten Anpassung der wenigstens einen Querfördereinrichtung und damit der erfindungsgemäßen Vorrichtung an die Erntebedingungen ermöglicht, wie sie bereits vorstehend umrissen ist. Demnach umfasst die Erntebreite eine bestimmbare bzw. wählbare, bei der erfindungsgemäßen Vorrichtung an die individuellen Gegebenheiten und Erfordernisse des abzuerntenden Feldes anpassbare Anzahl von Reihen der Feldfrüchte. Diese individuellen Gegebenheiten und Erfordernisse des abzuerntenden Feldes, z.B. Abmessungen des Feldes und/oder Abmessungen und/oder Anzahl der gleichzeitig abzuerntenden Reihen der Feldfrüchte oder auch eine gesamte Anzahl der Reihen der Feldfrüchte des ganzen Feldes, ferner eine Anzahl verfügbarer Erntearbeiter, eine Schiefwinkligkeit eines Feldrandes mit nacheinander beginnenden und/oder auslaufenden Reihen, wodurch die Anzahl der Reihen sich entlang des von der Vorrichtung entlang der Reihen abgefahrenen Weges ändert, oder auch sich entlang dieses Weges ändernde Breiten einzelner Reihen und/oder Abstände einzelner Reihen zueinander, bilden Erntebedingungen, an die die erfindungsgemäße Vorrichtung auf vorteilhafte Weise insbesondere durch die Dimensionierung der wenigstens einen Querfördereinrichtung anpassbar ausgebildet ist.

Die wenigstens eine Querfördereinrichtung ragt in ihrer Betriebsstellung vom Zentralbereich her im Wesentlichen quer zur Fahrtrichtung der Vorrichtung während des Erntevorgangs über die vorgegebene bzw. gewählte Anzahl der zugleich abzuerntenden Reihen der Feldfrüchte, d.h. überspannt die Erntebreite.

Die Förderrichtung der wenigstens einen Querfördereinrichtung weist entlang einer Längserstreckung der wenigstens einen Querfördereinrichtung von der bzw. den vom Zentralbereich am weitesten entfernt belegenen der von der Erntebreite umfassten Reihen der Feldfrüchte zum Zentralbereich hin.

Die Erntebreite wird außer durch die wählbare Anzahl der Reihen von Feldfrüchten, wie dies vorstehend ausgeführt ist, auch durch die Breite der einzelnen Reihen bestimmt. Ändern sich z.B. Anzahl und/oder Breite der Reihen, insbesondere der zugleich abzuerntenden Reihen, entlang deren Längserstreckung, verändern sich damit die Erntebedingungen.

Ist die erfindungsgemäße Vorrichtung z.B. zum Ernten von Spargel ausgebildet, ermöglicht es die Adaptierbarkeit der Erntebreite, diese flexibel an die verschiedenen, z.B. durch verschiedene Dammbreiten, verschiedene Anzahlen verfügbarer Erntearbeiter, insbesondere Stechpersonal, schief verlaufende Spargelreihen, usw. verursachten Erntebedingungen anpassen zu können.

Wird diese Adaptierbarkeit beispielsweise dadurch geschaffen, dass die Arme relativ zueinander in Längsrichtung verschiebbare Teilfördereinrichtungen, d.h. Teilstücke, umfassen, weist jedes Teilstück bevorzugt ein eigenes Fördermittel, insbesondere ein eigenes, umlaufendes Förderband auf. Hierdurch ist sogar eine stufenlose Anpassung der Erntebreite möglich. In einer anderen Ausgestaltung wird die Adaptierbarkeit dadurch erreicht, dass die wenigstens eine Querfördereinrichtung in mehrere Teilstücke unterteilt wird, die jeweils gegeneinander verschwenkbar sind, wobei jeweils senkrechte Schwenkachsen bevorzugt sind. Bevorzugt sind die Teilfördereinrichtungen einer Querfördereinrichtung gegenläufig zueinander schwenkbar ausgestaltet. Die Teilstücke können jedoch auch um waagerechte Schwenkachsen schwenkbar ausgebildet sein. Auch hier weist bevorzugt jedes Teilstück jeweils ein eigenes Förderband auf.

Durch die Schwenk- bzw. Einklappbarkeit der wenigstens einen Querfördereinrichtung benötigt der Schleppzug aus Schleppfahrzeug und erfindungsgemäßer Vorrichtung beim Wenden auf dem Vorgewende am Ende des Feldes und damit der Reihen der Feldfrüchte wenig Platz. Die Fläche des Feldes ist dann besser nutzbar, da das Vorgewende verkleinert werden kann. Dabei ist ein Verschwenken der Teilfördereinrichtungen um im Wesentlichen senkrechte Achsen besonders leicht und energiesparend handhabbar im Vergleich zu einem Einklappen um im Wesentlichen waagerechte Achsen. Insbesondere treten dabei keine Beeinträchtigungen oder Gefährdungen des Bedienpersonals durch herabfallende Teile, z.B. Feldfrüchte, auf, und der Fördervorgang kann, wie auch beim Verschieben der Teilfördereinrichtungen gegeneinander, auch bei Einfahren der Arme kontinuierlich fortgesetzt werden. Eine dadurch erzielte Arbeitserleichterung und Zeitersparnis insbesondere beim Wenden des Schleppzugs am Ende der Reihen der Feldfrüchte steigert die Effektivität des Betriebs der erfindungsgemäßen Vorrichtung.

Zum Ausführen des beschriebenen Verschiebens und/oder Verschwenkens weist die wenigstens eine Querfördereinrichtung Antriebsmittel auf, die bevorzugt mit Hydraulikmotoren und/oder Hydraulikzylindern mit passenden mechanischen Getrieben ausgebildet sind. In Abwandlungen sind die Antriebsmittel elektrisch betrieben, z.B. aus dem Bordnetz des Schleppfahrzeugs, oder sie sind über dessen Zapfwelle betrieben.

In einer vorteilhaften Weiterbildung der erfindungsgemäßen Vorrichtung ist die wenigstens eine Querfördereinrichtung mit Mitteln zum Ausrichten der geernteten Feldfrüchte ausgebildet, wobei insbesondere die Mittel zum Ausrichten der geernteten Feldfrüchte ausgebildet sind: mit wenigstens einem Anschlag, an den die Feldfrüchte in definierter Lage anlegbar sind, und/oder mit einer Teilung in Aufnahmebereiche, wobei bevorzugt jeder der Aufnahmebereiche zum Aufnehmen und/oder Ausrichten der Feldfrüchte in die definierte Lage ausgebildet ist, und/oder mit einer, insbesondere einer rinnenförmigen, Einwölbung der wenigstens einen Querfördereinrichtung im Wesentlichen quer zu einer Förderrichtung der Feldfrüchte entlang der wenigstens einen Querfördereinrichtung. Dabei kann jeder der Aufnahmebereiche wahlweise derart ausgestaltet sein, dass darin ein oder mehrere Exemplare der Feldfrüchte aufgenommen werden können, wobei wesentlich die definierte Lage der Feldfrüchte gewährleitet sein muss. Die Ausgestaltung der wenigstens einen Querfördereinrichtung mit einer Einwölbung stellt hierbei eine besonders bevorzugte Lösung dar, bei der die Einwölbung außer als leicht, bequem und einfach handhabbares Mittel zur Ausrichtung der Feldfrüchte auch einem gegen Herabfallen der Feldfrüchte von der wenigstens einen Querfördereinrichtung gesicherten Fördern dient. Darüber hinaus ist eine Einwölbung leicht zu bewerkstelligen, z.B. mit einem flexiblen, gewölbt geführten Förderband.

Bei der Weiterbildung der wenigstens einen Querfördereinrichtung mit wenigstens einem Anschlag und/oder einer Teilung ist vorteilhaft die wenigstens eine Querfördereinrichtung durchgängig ausgebildet, d.h. insbesondere nicht durch eine Vorwascheinheit unterbrochen. Bevorzugt ist die wenigstens eine Querfördereinrichtung dabei mit der Waschfördereinrichtung, die sich wenigstens in der Hauptwascheinheit erstreckt, zu einer gemeinsamen Fördereinrichtung verbunden. Bevorzugt kann dann auch wenigstens eine Übergabeeinrichtung, z.B. 90°-Förderkurve, der vorbeschriebenen Art von dieser gemeinsamen Fördereinrichtung umfasst sein. Durch diese Ausgestaltung wird ein erneutes Ausrichten der Feldfrüchte nach dem Hauptwaschen - wahlweise auch nach dem Vorwaschen - und/oder vor dem Schneiden und/oder Sortieren eingespart, wodurch die Behandlung der Feldfrüchte und die dazu vorgesehenen Einrichtungen vereinfacht werden. Wahlweise sind der Anschlag und/oder die Teilung auf der wenigstens einen Querfördereinrichtung bereits dort angeordnet, wo die Feldfrüchte von den Erntearbeitern auf die wenigstens eine Querfördereinrichtung gelegt werden, so dass dieses Auflegen gleich in der für die Behandlung der Feldfrüchte in der Weiterverarbeitungsvorrichtung vorgesehenen richtigen Ausrichtung erfolgt, oder der Anschlag und/oder die Teilung sind entlang der wenigstens einen Querfördereinrichtung erst näher am Zentralbereich vorgesehen. In der Teilung werden die Feldfrüchte bevorzugt nicht nur ausgerichtet, sondern auch von der Querfördereinrichtung gefördert.

Bei der Weiterbildung der wenigstens einen Querfördereinrichtung mit einer Einwölbung, insbesondere mit einer rinnenförmigen Einwölbung, erfolgt eine Ausrichtung der Feldfrüchte bevorzugt in ihrer Förderrichtung entlang der wenigstens einen Querfördereinrichtung. Dies stellt insbesondere für stangenförmiges Gemüse eine sehr einfache und wirksame Form der Ausrichtung dar, die auch ein Selbstausrichten der Feldfrüchte bei ungenauem Auflegen auf die wenigstens eine Querfördereinrichtung ermöglicht. Außerdem kann ggf. eine Übergabeeinrichtung eingespart werden, da ein Ändern der Ausrichtung der Feldfrüchte bei deren Übergang von der wenigstens einen Querfördereinrichtung an die wenigstens eine Weiterverarbeitungsvorrichtung in einer bevorzugten Ausbildung trotz Änderung der Förderrichtung der Feldfrüchte entfallen kann. Besonders bevorzugt können bei dieser Weiterbildung der wenigstens einen Querfördereinrichtung die Feldfrüchte unmittelbar in der gewünschten Ausrichtung in die wenigstens eine Sammeleinrichtung gefördert werden.

Nach einer anderen Ausführungsform ist die erfindungsgemäße Vorrichtung gekennzeichnet durch zwei nach zwei im Wesentlichen gegensätzlichen Richtungen vom Zentralbereich aus sich erstreckende Querfördereinrichtungen, an die sich in der Weiterverarbeitungsvorrichtung wahlweise je wenigstens eine der wenigstens einen Vorwascheinheit oder je wenigstens eine der wenigstens einen Übergabeeinrichtung oder je wenigstens eine der wenigstens einen Sammeleinrichtung sowie je wenigstens eine der wenigstens einen Schneideeinrichtung und/oder Wascheinrichtung oder Hauptwascheinheit und/oder Sortiereinrichtung und/oder Verpackungseinrichtung, bevorzugt in dieser Reihenfolge, anschließt. Die Weiterverarbeitung der geernteten Feldfrüchte erfolgt bei dieser Ausführungsform somit auf zwei parallel zueinander arbeitenden Einrichtungen bzw. Verarbeitungspfaden, hier als Weiterverarbeitungslinien bezeichnet, von denen jede gebildet ist durch wahlweise die wenigstens eine Vorwascheinheit oder Übergabeeinrichtung oder Sammeleinrichtung und/oder Schneideeinrichtung und/oder Wascheinrichtung oder Hauptwascheinheit und/oder Sortiereinrichtung und/oder Verpackungseinrichtung. Wie bereits vorstehend erläutert worden ist, sind die aufgezählten Bestandteile in jeder der Weiterverarbeitungslinien besonders vorteilhaft in der genannten Reihenfolge angeordnet. In Abwandlungen können auch einzelne der aufgezählten Bestandteile von beiden Weiterverarbeitungslinien gemeinsam genutzt werden. Durch die zwei parallel arbeitenden Weiterverarbeitungslinien werden eine Steigerung der Leistungsfähigkeit der erfindungsgemäßen Vorrichtung und ein schnellerer Durchlauf der Feldfrüchte durch die Weiterverarbeitungsvorrichtung erreicht. Auch kann bevorzugt die Wascheinrichtung und/oder die Schneideeinrichtung als Doppelanlage ausgebildet sein, von der Waschfördereinrichtungen der beiden Weiterverarbeitungslinien überspannt werden. Dadurch kann der Aufbau der Weiterverarbeitungsvorrichtung trotz hoher Leistungsfähigkeit vereinfacht werden, da nur ein Vorratsbehälter für die Waschflüssigkeit, also nur ein Wassertank, nur eine Pumpeinrichtung usw. vorgesehen werden muss.

Gemäß einer bevorzugten Weiterbildung der erfindungsgemäßen Vorrichtung sind am Zentralbereich Entlademittel, bevorzugt automatisierte Entlademittel, vorgesehen zum automatisierten Absetzen und/oder Überladen von der Weiterverarbeitungsvorrichtung abgegebener, insbesondere verpackter Feldfrüchte, vom Zentralbereich, insbesondere von der Weiterverarbeitungsvorrichtung, bevorzugt auf ein Transportmittel. Als ein derartiges Transportmittel dient insbesondere ein Fahrzeug, mit dem die geernteten, weiterverarbeiteten und insbesondere verpackten Feldfrüchte vom Feld abtransportiert und einem Vertrieb bzw. einer Vermarktung zugeführt werden, z.B. ein Lastkraftwagen, ein Schlepper mit Anhänger, oder dergleichen. Auch ist es möglich, die erfindungsgemäße Vorrichtung mit einer Anhängevorrichtung für einen Anhänger oder dergleichen auszustatten, der während des Erntevorgangs vom Schleppfahrzeug z.B. hinter der Vorrichtung mit über das Feld gezogen wird und dadurch kontinuierlich zum Aufnehmen der geernteten, weiterverarbeiteten und insbesondere verpackten Feldfrüchte verfügbar ist.

Gemäß einer anderen Abwandlung sind die Entlademittel zum Absetzen der geernteten, weiterverarbeiteten und insbesondere verpackten Feldfrüchte auf dem Erdboden des Feldes ausgebildet, bevorzugt am Ende der Reihen der Feldfrüchte, wo die Feldfrüchte vorübergehend zwischengelagert werden können zum späteren Aufnehmen durch ein Transportmittel der vorgenannten Art. Weiter bevorzugt ist auf dem Zentralbereich der erfindungsgemäßen Vorrichtung ein Zwischenlager für eine bestimmte Menge auf ein solches Transportmittel überzuladender Feldfrüchte vorgesehen, um den Abtransport flexibler und leichter handhabbar gestalten zu können. Besonders bevorzugt kann dieses Zwischenlager mit einer Kühlung für die zwischengelagerten Feldfrüchte ausgestattet sein.

Für den Abtransport der Feldfrüchte ist bevorzugt ein Verpacken in der Größe und Gestalt der Feldfrüchte angepasste Verpackungsmittel vorgesehen. Als solche Verpackungsmittel sind z.B. Verkaufsverpackungen bzw. -umhüllungen, Schachteln, Bunde, Kästen und/oder Paletten einsetzbar. Vorteilhaft ist eine Kombination derartiger Verpackungsmittel einsetzbar. Besonders bevorzugt sind Kästen vorgesehen, in die die Feldfrüchte, ggf. portionsweise in Verkaufsverpackungen bzw. -umhüllungen, Schachteln oder Bunde verpackt, einsortierbar sind, und sind ferner Paletten vorgesehen, auf denen die Kästen zu Kolli zusammenfassbar, d.h. stapelbar, sind. Bevorzugt werden die Feldfrüchte in diesen Kästen, besonders bevorzugt in den Kolli, auf das Transportmittel oder den Erdboden abgesetzt und/oder übergeladen und/oder im Zwischenlager zwischengelagert. Entsprechend sind die Entlademittel vorteilhaft für das Ent- bzw. Überladen dieser Kästen und/oder Paletten ausgebildet.

Nach einer vorteilhaften Weiterbildung ist die erfindungsgemäße Vorrichtung gekennzeichnet durch wenigstens eine Einrichtung zum zeit- und/oder abschnittsweisen, automatischen Öffnen und/oder Anheben und/oder Entfernen und/oder Wenden und/oder anschließenden automatischen Wiederaufbringen wenigstens eines zum Überdecken wenigstens einer der Reihen der Feldfrüchte ausgebildeten, insbesondere folienbahnförmigen Schutzmittels.

Dabei ist der Begriff "abschnittsweise" gleichbedeutend zu setzen mit "streckenweise", d.h. entlang eines bestimmten, mit der Vorrichtung sich während des Erntevorgangs bewegenden Streckenabschnitts der wenigstens einen Reihe erfolgt das Öffnen bzw. Anheben bzw. Entfernen bzw. Wenden bzw. Wiederaufbringen des Schutzmittels. In dem Streckenabschnitt der Reihe der Feldfrüchte, innerhalb dessen das Schutzmittel geöffnet bzw. angehoben, d.h. abgedeckt bzw. entfernt ist, findet der Erntevorgang durch die Erntearbeiter statt. Vorteilhaft ist die Einrichtung zum zeit- und/oder abschnittsweisen, automatischen Öffnen und/oder Anheben und/oder Entfernen und/oder wenden und/oder anschließenden automatischen Wiederaufbringen des wenigstens einen Schutzmittels derart ausgestaltet, dass der bestimmte Streckenabschnitt, innerhalb dessen das Schutzmittel geöffnet bzw. angehoben, d.h. abgedeckt bzw. entfernt ist, so kurz wie möglich ist. In einem besonders vorteilhaften Ausführungsbeispiel ist dieser Streckenabschnitt nur etwa zwei bis drei Meter lang, so dass die Erntearbeiter genug Arbeitsraum haben, das Schutzmittel jedoch erst unmittelbar vor dem Erntevorgang geöffnet bzw. angehoben, d.h. abgedeckt bzw. entfernt wird und unmittelbar nach dem Erntevorgang wieder aufgebracht wird. Damit wird ein optimaler Schutz der Feldfrüchte erzielt. Insbesondere für das Ernten von Spargel ist dies gegenüber einem herkömmlichen Erntevorgang ein großer Fortschritt, da dabei üblicherweise immer gleich 100 Meter oder mehr des Schutzmittels, z.B. einer Schutzfolie, angehoben bzw. aufgeklappt werden.

Bevorzugt ist dabei für jede einzelne Reihe der Feldfrüchte ein gesondertes, insbesondere folienbahnförmiges Schutzmittel und für jedes dieser Schutzmittel zu dessen zeit- und/oder abschnittsweisem, automatischem Öffnen und/oder Anheben und/oder Entfernen und/oder Wenden und/oder anschließendem automatischem Wiederaufbringen eine gesonderte Einrichtung vorgesehen.

Insbesondere für das Ernten von Spargel dient dabei eine Vorrichtung zum Anheben und Wiederabsenken einer Abdeckfolie der Spargeldämme. Diese bewirkt, dass auf Höhe der erfindungsgemäßen Vorrichtung die Spargeldämme abgedeckt sind und der Spargel gestochen werden kann. Für sonstige Feldfrüchte ist auch eine Gestaltung der vorbezeichneten Einrichtung zum Öffnen und/oder Schließen bzw. Anheben und/oder Absenken eines z.B. teilstarren bzw. vorgeformten Folientunnels oder dergleichen möglich. Nach einer weiteren Abwandlung ist eine zweibahnige Schutzfolie für die Reihen der Feldfrüchte vorgesehen, deren zwei Bahnen längsmittig aneinandergrenzen oder überlappen, und die vorbezeichnete Einrichtung ist dazu ausgestaltet, diese Bahnen nach den Seiten aufzuklappen und im Anschluss an den Erntevorgang wieder zuzuklappen.

Insbesondere für das Ernten von Spargel ist dabei noch eine andere Variation umfasst, bei der das Schutzmittel zwei übereinander angeordnete Folienbahnen aufweist. Bevorzugt liegt dabei eine untere dieser Folienbahnen wenigstens nahezu auf je einem der Spargeldämme auf, wohingegen eine obere dieser Folienbahnen darüber gedeckt ist, und zwar mit einem bestimmten Abstand, so dass zwischen den Folienbahnen eine Luftschicht verbleibt. Insbesondere ist die obere Folienbahn auf entlang der Spargeldämme verteilt angeordneten Stützeinrichtungen, bevorzugt bügelartigen Stützeinrichtungen, aufgelegt und so breit bemessen, dass sie beidseitig den Erdboden neben dem betreffenden Spargeldamm berührt bzw. dort aufliegt und somit die Luftschicht einschließt. Ihrer Form wegen wird diese Folienkonfiguration auch als "M-Folie" oder "M-Bogen-System" bezeichnet. Bevorzugt ist die obere Folienbahn lichtdurchlässig, die untere dagegen geschwärzt. Auf diese Weise entsteht ein Gebilde ähnlich einem Treibhaus, welches das Wachstum der Feldfrüchte, hier insbesondere des Spargels, fördert und die Feldfrüchte vor Witterungseinflüssen schützt. Dabei absorbiert die Schwärzung der unteren Folienbahn auf sie eingestrahlte Sonnenenergie und bewirkt so eine Erwärmung der Spargeldämme. Um diese Erwärmung regulieren zu können, ist die Schwärzung der unteren Folienbahn nur einseitig. Durch Wenden der unteren Folienbahn, das durch die vorbeschriebene Einrichtung der erfindungsgemäßen Vorrichtung vornehmbar ist, kann die Schwärzung wahlweise dem Spargeldamm zugekehrt und die Erwärmung verringert oder der Sonne zugekehrt und die Erwärmung vergrößert werden. Auf die Lichtundurchlässigkeit der unteren Folienbahn, die außerdem durch die Schwärzung bewirkt ist, hat dieses Wenden keinen Einfluss.

Nach einer weiteren vorteilhaften Ausgestaltung umfasst die erfindungsgemäße Vorrichtung wenigstens eine Witterungsschutzeinrichtung, insbesondere Sonnenschutzeinrichtung, zum Schützen der Vorrichtung, bevorzugt wenigstens des Zentralbereichs und/oder der wenigstens einen Querfördereinrichtung, vor Witterungseinflüssen, insbesondere vor Sonneneinstrahlung, und/oder wenigstens eine Beleuchtungseinrichtung zum Beleuchten wenigstens der wenigstens einen Querfördereinrichtung und/oder des Zentralbereichs und/oder wenigstens einiger der im Wesentlichen in Reihen angebauten Feldfrüchte. Mit der Witterungsschutzeinrichtung werden schädliche Witterungseinflüsse, insbesondere Sonneneinstrahlung, von den Feldfrüchten, d.h. vom Erntegut, abgehalten und somit ein dadurch bedingter Qualitätsverlust der Feldfrüchte während des Konfektionierens und Bereitstellens zum Transport vermieden. Außerdem schützt eine derartige Witterungsschutzeinrichtung, insbesondere Sonnenschutzeinrichtung, aber auch Regenschutzeinrichtung, ebenso die Erntearbeiter, d.h. Feldarbeiter, während des Erntevorgangs.

Besonders bevorzugt ist eine derartige Witterungsschutzeinrichtung, insbesondere Sonnenschutzeinrichtung, vorgesehen für das Ernten von Spargel als Feldfrüchte. Wird nämlich insbesondere der Spargel auch nur kurzzeitig der Sonne ausgesetzt, setzt beim Spargel eine Photosynthese ein, die zu einer unerwünschten Violettfärbung des Spargels führen kann. Deswegen ist an der erfindungsgemäßen Vorrichtung durch die Sonnenschutzeinrichtung ein Sonnenschutz vorgesehen, der z.B. in Form eines Daches, eines Sonnenschirms, eines Sonnensegels oder dergleichen ausgebildet ist. Dadurch sind die Feldfrüchte, d.h. der Spargel bzw. die einzelnen geernteten Spargelstangen, beschattet und eine Violettfärbung wird vermieden. Dies hat Vorteile gegenüber herkömmlichen Ernteverfahren, bei denen der von den Feldarbeitern, hier: Spargelstechern, gestochene Spargel direkt in Kisten abgestellt und der Sonne ausgesetzt wird. Der Sonnenschutz erstreckt sich bevorzugt neben dem Zentralbereich auch über die wenigstens eine Querfördereinrichtung, um auch den hiermit geförderten Spargel bereits vor Sonneneinstrahlung zu schützen. Ferner ist vorteilhaft der Sonnenschutz an der wenigstens einen Querfördereinrichtung derart ausgerichtet bzw. angeordnet, dass gleichzeitig auch die an der wenigstens einen Querfördereinrichtung arbeitenden, insbesondere hinter der wenigstens einen Querfördereinrichtung hergehenden, Feldarbeiter beim Erntevorgang vor Sonneneinstrahlung geschützt sind. Ebenso ist bevorzugt ein auf der erfindungsgemäßen Vorrichtung angeordneter Feldarbeiter, der z.B. die in die Weiterverarbeitungsvorrichtung geförderten Spargel kontrolliert und gegebenenfalls händisch ausrichtet, vor Sonneneinstrahlung geschützt. Dies ist insoweit ein weiterer Vorteil, da hierdurch die Arbeitsplatzqualität verbessert wird. Der Sonnenschutz kann die Feldarbeiter auch gleichzeitig vor Regen schützen.

Wahlweise oder in Kombination mit der vorbeschriebenen Witterungsschutzeinrichtung ist vorteilhaft wenigstens eine Beleuchtungseinrichtung vorgesehen und am Zentralbereich und/oder der wenigstens einen Querfördereinrichtung angeordnet, um wenigstens die wenigstens eine Querfördereinrichtung und/oder den Zentralbereich und/oder wenigstens einige der im Wesentlichen in Reihen angebauten Feldfrüchte zu beleuchten, d.h. insgesamt wenigstens nahezu die gesamten Arbeitsplätze der an der erfindungsgemäßen Vorrichtung beschäftigten Feldarbeiter. Damit kann der Erntevorgang auch bei ungünstigen bzw. ungenügenden Lichtverhältnissen, insbesondere nachts, durchgeführt werden. Damit ist einerseits erreichbar, die Feldfrüchte zeitlich unmittelbar vor ihrem Weitertransport und ihrer regelmäßig in den frühen Morgenstunden erfolgenden Vermarktung zu ernten und damit so frisch wie möglich dem Verbraucher zuzuführen. Anderseits besteht gerade in Anbaugegenden mit heißem Klima ein besonderer Bedarf an einem nächtlich durchgeführten Erntevorgang, weil durch die dann geringeren Umgebungstemperaturen eine Austrocknung bzw. ein Welken des Ernteguts vermindert werden kann. Vorteilhaft ist die wenigstens eine Beleuchtungseinrichtung mit der wenigstens einen Witterungsschutzeinrichtung in der Weise kombiniert, dass beide an wenigstens einer gemeinsamen Halteeinrichtung angeordnet sind; z.B. ist eine Sonnenschutzeinrichtung als Sonnenschutzdach auf wenigstens einer Stütze angeordnet oder in Form einer Plane oder dergleichen über einen Spriegel gespannt, wobei die Stütze oder der Spriegel zugleich als Lichtmast dient.

Gemäß einer bevorzugten Weiterbildung umfasst die erfindungsgemäße Vorrichtung eine Kühlvorrichtung zum Kühlen der Feldfrüchte, wobei die Feldfrüchte insbesondere wenigstens in wenigstens einer der von der Weiterverarbeitungsvorrichtung umfassten wenigstens einen Wasch- und/oder Schneide-und/oder Sortier- und/oder Verpackungseinrichtung kühlbar sind. Bevorzugt kann die Kühlung wahlweise oder zusätzlich auch im vorstehend beschriebenen Zwischenlager vorgenommen sein. Damit kann eine Wärmeeinwirkung auf die geernteten Feldfrüchte und somit ein dadurch bedingter Qualitätsverlust der Feldfrüchte während des Konfektionierens und Bereitstellens zum Transport vermieden werden.

Besonders bevorzugt ist eine derartige Kühlvorrichtung vorgesehen für das Ernten von Spargel als Feldfrüchte. Es zeigt sich, dass die Photosynthese auch bereits bei Wärmeeinwirkung auf den Spargel einsetzen kann. Außerdem trocknet der Spargel bei Wärmeeinwirkung aus. Daher ist nach der beschriebenen Weiterbildung vorteilhaft eine Kühlvorrichtung an Bord der erfindungsgemäßen Vorrichtung vorgesehen. Diese Kühlvorrichtung ist in unterschiedlicher Weise ausgestaltbar. Beispielsweise könnte eine eisproduzierende Maschine an Bord der erfindungsgemäßen Vorrichtung, insbesondere auf dem Zentralbereich vorgesehen sein, sodass der gewaschene und geschnittene Spargel dann auf Eis gelegt werden kann. Auch kann in der Waschvorrichtung ein Kühlaggregat vorgesehen sein, sodass sichergestellt ist, dass der Spargel mit kaltem Wasser gewaschen wird. Auch kann der Spargel in gekühltem Wasser gelagert werden, insbesondere in einer wahlweise vorgesehenen Vorwascheinheit. Darüber hinaus kann ein Kühlkompressor oder dergleichen vorgesehen sein, der z.B. über die Kopplungseinrichtung mit der Energieabgabevorrichtung, vorzugsweise der hydraulischen und/oder mechanischen Energieabgabevorrichtung, des Motorfahrzeugs, insbesondere die Kopplungseinrichtung mit einem Hydraulikkreis und/oder einer Zapfwelle des Motorfahrzeugs, angeschlossen wird und der den Spargel in der Art eines Kühlschrankes kühlt. Im Vergleich zum herkömmlichen Erntevorgang ist die Kühlung an Bord der erfindungsgemäßen Vorrichtung insofern vorteilhaft, als im herkömmlichen Ernteverfahren der Spargel nach dem Stechen erst in Kisten gelagert, dann eingesammelt und in eine Lagerhalle gebracht wird und erst dann eine Kühlung erfolgt, teilweise Stunden nach dem Stechen.

Die eingangs genannte Aufgabe wird ferner gelöst durch ein Verfahren zum Ernten von im Wesentlichen in Reihen angebauten Feldfrüchten, bevorzugt von stangenförmigem Gemüse, besonders bevorzugt von Spargel, umfassend die Verfahrensschritte
- Ernten, insbesondere händisches Ernten, der Feldfrüchte, bevorzugt der stangenförmigem Gemüse, besonders bevorzugt Stechen von Spargelstangen, und
- Ablegen, insbesondere händisches Ablegen, der geernteten Feldfrüchte auf wenigstens einer Querfördereinrichtung,
- Fördern, bevorzugt automatisches Fördern, der geernteten Feldfrüchte durch die wenigstens eine Querfördereinrichtung und wahlweise die wenigstens eine Übergabeeinrichtung zu einer Weiterverarbeitungsvorrichtung und wahlweise Sammeln der von der wenigstens einen Querfördereinrichtung geförderten Feldfrüchte und/oder Bereitstellen der Feldfrüchte durch wenigstens eine Sammeleinrichtung an die Weiterverarbeitungsvorrichtung,
- wahlweise in wenigstens einer Vorwascheinheit der Weiterverarbeitungsvorrichtung Vorwaschen, insbesondere automatisches Vorwaschen, der geernteten Feldfrüchte,
- in wenigstens einer Schneideeinrichtung der Weiterverarbeitungsvorrichtung Schneiden, insbesondere automatisches Schneiden, der Feldfrüchte, und/oder
- in wenigstens einer Hauptwascheinheit der Weiterverarbeitungsvorrichtung Hauptwaschen, insbesondere automatisches Hauptwaschen, der Feldfrüchte, und/oder in wenigstens einer Wascheinrichtung Waschen, insbesondere Hauptwaschen als einzigem Waschen, der Feldfrüchte, und/oder
- in wenigstens einer Sortiereinrichtung der Weiterverarbeitungsvorrichtung Sortieren, insbesondere automatisches Sortieren, der Feldfrüchte, und/oder
- in wenigstens einer Verpackungseinrichtung der Weiterverarbeitungsvorrichtung Verpacken, insbesondere automatisches Verpacken, der Feldfrüchte, und
- wahlweise mit einem bevorzugt sich an die Weiterverarbeitungsvorrichtung anschließenden Entlademittel Entladen, insbesondere automatisches Entladen, der Feldfrüchte.

Erfindungsgemäß werden alle Verfahrensschritte unmittelbar auf einem Feld, auf dem die Feldfrüchte angebaut sind, ausgeführt. Dadurch können entsprechende stationäre Anlagen eingespart werden, womit ein ortsungebundener Einsatz für die Weiterverarbeitung ermöglicht wird. Damit ist eine kostengünstige und flexible Weiterverarbeitung ohne Verlängerung von Transportwegen und Transportzeiten auch bei einem Ortswechsel der Vorrichtung zu verschiedenen Feldern oder Anbaugebieten möglich. Die Feldfrüchte können ab Feld sofort zur Vermarktung gebracht werden, ohne vorher den Weg über eine ggf. abgelegene, stationäre Anlage zur Weiterverarbeitung nehmen zu müssen.

Insbesondere werden die vorgenannten Verfahrensschritte mit einer Vorrichtung der vorbeschriebenen Art durchgeführt.

In einer vorzugsweise ausgeführten Unterkombination aus den vorgenannten Verfahrensschritten werden die Schritte Ernten, Ablegen, Fördern und Hauptwaschen als wichtigste Verfahrensschritte in dieser Reihenfolge durchgeführt. Hinzu kommen in weiterer Ausgestaltung des Verfahrens, aufgezählt in der Reihenfolge Ihrer Bedeutung für das Verfahren insgesamt, die Schritte Schneiden, Sortieren, Verpacken, Entladen und wahlweise Vorwaschen, so dass weiter vorzugsweise ausgeführte Unterkombinationen aus den vorgenannten Verfahrensschritten wahlweise zusätzlich die Verfahrensschritte Schneiden oder Sortieren oder Schneiden und Sortieren oder Vorwaschen und Schneiden oder Vorwaschen, Schneiden und Sortieren umfassen. Das Verpacken und/oder Entladen schließt sich daran, insbesondere an das Sortieren, wahlweise an.

Bevorzugt werden in einer Ausgestaltung des erfindungsgemäßen Verfahrens, bei dem die Weiterverarbeitung der Feldfrüchte wenigstens weitgehend händisch erfolgt, nacheinander die Verfahrensschritte Ernten, Ablegen, Fördern, Sammeln und Bereitstellen der Feldfrüchte in der wenigstens einen Sammeleinrichtung, Waschen, insbesondere Hauptwaschen als einziges Waschen, Sortieren und Verpacken, insbesondere Sortieren und wenigstens teilweise zugleich Verpacken in Sortier- und/oder Transportbehältern bzw. -kästen ausgeführt. Dieser Ablauf stellt eine besonders einfache und gestraffte Variante des erfindungsgemäßen Verfahrens dar.

### Kurze Beschreibung der Zeichnungen

Ein Ausführungsbeispiel der Erfindung ist in der Zeichnung dargestellt und wird im nachfolgenden näher beschrieben, wobei übereinstimmende Elemente in allen Figuren mit denselben Bezugszeichen versehen sind und eine wiederholte Beschreibung dieser Elemente weggelassen wird. Es zeigen:
- Figur 1: eine Draufsicht auf ein Ausführungsbeispiel für eine erfindungsgemäße Vorrichtung in einer grob schematischen Darstellung,
- Figur 2: eine grob schematische Schnittdarstellung des Ausführungsbeispiels der erfindungsgemäßen Vorrichtung gemäß Figur 1 entlang einer Schnittlinie A-A,
- Figur 3: eine grob schematische Schnittdarstellung des Ausführungsbeispiels der erfindungsgemäßen Vorrichtung gemäß Figur 1 entlang einer Schnittlinie B-B,
- Figur 4: eine Ausschnittvergrößerung aus Figur 1 mit einer grob schematischen Darstellung einer Abwandlung des Ausführungsbeispiels der erfindungsgemäßen Vorrichtung nach den Figuren 1 bis 3,
- Figur 5: eine Abwandlung der Figur 2 mit einer grob schematischen Darstellung einer Abwandlung des Ausführungsbeispiels der erfindungsgemäßen Vorrichtung nach den Figuren 1 bis 3,
- Figur 6: eine Abwandlung der Figur 3 mit einer grob schematischen Darstellung einer Abwandlung des Ausführungsbeispiels der erfindungsgemäßen Vorrichtung nach den Figuren 1 bis 3,
- Figur 7: eine isometrische Ansicht eines weiteren Ausführungsbeispiels einer erfindungsgemäßen Vorrichtung in einer schematischen Darstellung,
- Figur 8: eine Ausschnittvergrößerung aus der Darstellung von Figur 7 und
- Figur 9: eine grob schematische, perspektivische Darstellung einer Einzelheit des Ausführungsbeispiels der erfindungsgemäßen Vorrichtung gemäß Figuren 7 und 8.

### Bevorzugte Ausführungsform der Erfindung

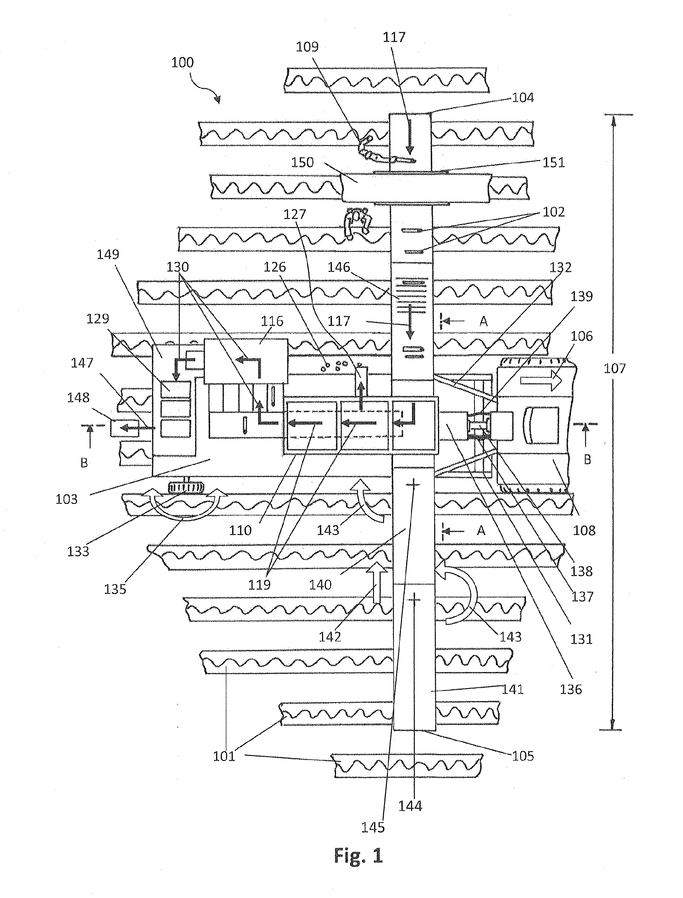

In den Figuren 1 bis 3 der Zeichnung ist mit dem Bezugszeichen 100 ein Ausführungsbeispiel für eine erfindungsgemäße Vorrichtung zum Ernten von in Reihen 101 angebauten Feldfrüchten 102 in einer grob schematischen Darstellung wiedergegeben. Insbesondere ist dieses Ausführungsbeispiel als Vorrichtung zum Ernten von Spargelstangen 102 eingerichtet und wird als solches beschrieben, wobei sowohl grüner als auch weißer Spargel in gleich vorteilhafter Weise geerntet und bearbeitet werden können. Eine Abwandlung der Vorrichtung, um damit zum Ernten anderer Feldfrüchte einsetzbar zu sein, insbesondere anderer stangenförmiger Feldfrüchte, ist möglich.

Die Vorrichtung 100 umfasst eine Arbeitsplattform 103 auf einem Fahrgestell, die einen Zentralbereich der Vorrichtung 100 bildet. An dem Zentralbereich 103 sind zwei Querfördereinrichtungen 104, 105 angeordnet. Die Querfördereinrichtungen 104, 105 stehen in Bezug auf eine durch einen Pfeil 106 angedeutete Fahrtrichtung der Vorrichtung 100 während des Erntevorgangs seitlich vom Zentralbereich 103 vor und überspannen im dargestellten Beispiel je fünf Reihen 101. Vom Zentralbereich 103 werden zwei weitere Reihen 101 überspannt, so dass die gesamte, durch Maßpfeile gekennzeichnete und mit dem Bezugszeichen 107 bezeichnete Erntebreite der Vorrichtung 100 hier als Beispiel durch zwölf Reihen gebildet ist. Diese Anzahl ist bei der Vorrichtung 100 gemäß den individuellen Gegebenheiten und Erfordernissen des abzuerntenden Feldes, z.B. Abmessungen des Feldes und/oder Abmessungen und/oder Anzahl der Reihen 101 der Feldfrüchte 102, aber auch nach der Anzahl der verfügbaren Erntearbeiter 109, wählbar. Während des Erntevorgangs fährt die Vorrichtung 100, angekoppelt an einen Ackerschlepper 108 und von diesem gezogen und betrieben, in Fahrtrichtung 106 die Reihen 101 entlang. Erntearbeiter 109 gehen in dieser Fahrtrichtung 106 hinter der Vorrichtung 100 und insbesondere den Querfördereinrichtungen 104, 105 her und stechen die Spargelstangen 102. Die Geschwindigkeit des Ackerschleppers 108 mit der Vorrichtung 100, die gemeinsam einen Schleppzug bilden, ist so langsam gewählt, dass die Erntearbeiter 109 der Vorrichtung 100 beim Ernten dichtauf folgen können. Jede gestochene Spargelstange wird umgehend auf der betreffenden Querfördereinrichtung 104 bzw. 105 abgelegt. Mittels der Querfördereinrichtungen 104, 105 werden die gestochenen Spargelstangen 102 unmittelbar in den Zentralbereich 103 der Vorrichtung 100 befördert. Dazu werden die Querfördereinrichtungen 104, 105 insbesondere motorisch betrieben.

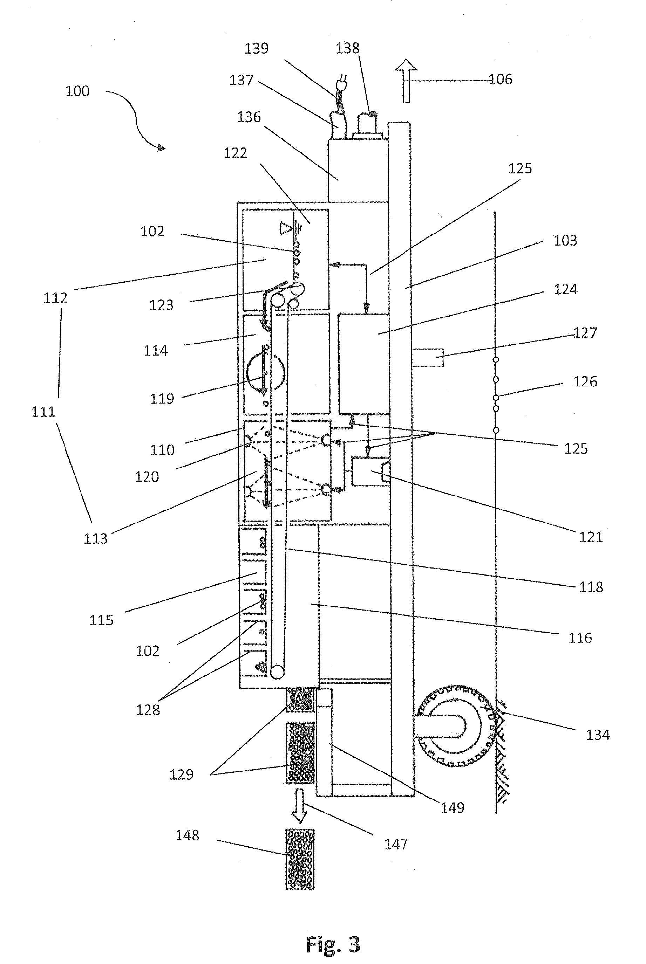

Der Zentralbereich 103 umfasst eine automatisierte Weiterverarbeitungsvorrichtung 110 zum automatischen Konfektionieren, d.h. Waschen und/oder Schneiden und/oder Sortieren und/oder Verpacken, der Feldfrüchte 102, hier der Spargelstangen. Die Weiterverarbeitungsvorrichtung 110 enthält im dargestellten Beispiel eine vollautomatisierte, zweistufig mit einer Vorwascheinheit 112 und einer Hauptwascheinheit 113 ausgebildete Wascheinrichtung 111, eine vollautomatisierte Schneideeinrichtung 114, eine vollautomatisierte Sortiereinrichtung 115 und eine vollautomatisierte Verpackungseinrichtung 116, die näher in Figur 3 dargestellt sind. Von den Querfördereinrichtungen 104, 105 werden die Spargelstangen 102 zu der automatisierten Weiterverarbeitungsvorrichtung 110 gefördert. Die Förderrichtung dieser Förderung ist durch Pfeile 117 angedeutet.

In der Weiterverarbeitungsvorrichtung 110 sind als Bearbeitungsvorgänge einzeln oder in Kombination vorgesehen: Waschen der Feldfrüchte in der Wascheinrichtung 111, wodurch insbesondere Erdreste bzw. -spuren von den Feldfrüchten entfernt werden, Schneiden der Feldfrüchte auf verkaufsgerechte Abmessungen, z.B. Längen, in der Schneideeinrichtung 114, Sortieren der Feldfrüchte nach einem oder mehreren Sortierungskriterien, wie z.B. Dickenabmessungen, in der Sortiereinrichtung 115 und Verpacken in Verkaufsverpackungen und/oder Transportbehältnisse, z.B. Schachteln, Bunde, Kästen, in der Verpackungseinrichtung 116. In einer Abwandlung können einzelne der Bearbeitungsvorgänge auch von Hand ausführbar sein wie z.B. das Sortieren oder Verpacken.

Die Hauptwascheinheit 113 ist mit einer vollautomatischen Waschfördereinrichtung 118 zum Fördern der Feldfrüchte 102 in einer durch Pfeile 119 bezeichneten Förderrichtung durch die Hauptwascheinheit 113 ausgebildet. Ferner ist eine Sprüheinrichtung 121 mit einer Anzahl von Sprühdüsen 120 zum Reinigen der Feldfrüchte 102 durch Absprühen mit einer Waschflüssigkeit, insbesondere Wasser, vorhanden. Die Hauptwascheinheit 113 ist somit als aktive Wascheinheit ausgebildet. Die Sprühdüsen 120 sind sowohl oberhalb als auch unterhalb der Waschfördereinrichtung 118 angeordnet, so dass das Absprühen der Feldfrüchte 102 aus zwei Richtungen, nämlich von oben und unten, erfolgt, in Bezug auf die Förderrichtung 119 der Waschfördereinrichtung 118 gesehen. Dazu ist die Waschfördereinrichtung 118 mit einem netz- und/oder gitterartig ausgebildeten Förderband und/oder einer Förderkette oder dergleichen ausgeführt, so dass die Waschflüssigkeit 122 von allen Seiten auf das Erntegut 102 treffen kann.

Die Vorwascheinheit 112 befindet sich bezüglich der Förderrichtung 119 der Waschfördereinrichtung 118, in der die geernteten Feldfrüchte 102 durch die Weiterverarbeitungsvorrichtung 110 gefördert werden, vor der Hauptwascheinheit 113. Die Waschfördereinrichtung 118 erstreckt sich vorteilhaft von der Vorwascheinheit 112 durch die Schneideeinrichtung 114 und die Hauptwascheinheit 113 bis in die Sortiereinrichtung 115.

Die Vorwascheinheit 112 ist mit einem trogartigen Behältnis ausgestaltet, welches mit Waschflüssigkeit 122, bevorzugt mit von Zusätzen freiem Wasser, befüllbar ist. Dieses Behältnis bildet ein Wasserbad und ist so gestaltet, dass im Betrieb die von den Querfördereinrichtungen 104, 105 zum Zentralbereich 103 geförderten und darin der Vorwascheinheit 112 zugeführten Feldfrüchte 102 in die Waschflüssigkeit 122 fallen. In der Vorwascheinheit 112 löst sich wenigstens der grobe Schmutz, insbesondere den Feldfrüchten bzw. dem Erntegut 102 anhaftende Erdreste oder -spuren, und sedimentiert dort. In dieser Ausgestaltung ist die Vorwascheinheit 112 als passive Wascheinheit und wahlweise zugleich als Auffang- und Zwischenspeicherbehälter für das Erntegut 102 ausgebildet. Das auf diese Weise vorgereinigte Erntegut 102 ist dann für weitere Bearbeitungsschritte bereit, unter anderem für das Hauptwaschen in der Hauptwascheinheit 113.

Die Wascheinrichtung 111 ist für ein vollautomatisches Waschen eingerichtet, bei dem jede händische Zwischenbehandlung, d.h. Handarbeit einer Bedienperson, entfällt. Dies beinhaltet auch eine mechanisierte Entnahme des Erteguts 102 aus der Vorwascheinheit 112, wozu eine Entnahme- und/oder Vereinzelungseinrichtung 123 an sich bekannter Art vorgesehen ist.

In einer Abwandlung ist ein geführtes Fördern des Ernteguts 102 durch die Vorwascheinheit 112 vorgesehen, so dass eine von den Querfördereinrichtungen 104, 105 vorgegebene Ausrichtung der Feldfrüchte 102 in der Weiterverarbeitungsvorrichtung 110 für die nachfolgende Bearbeitung, d.h. Schneiden, Hauptwaschen, Sortieren, Verpacken, auf dem gesamten Durchlauf des Ernteguts 102 durch die Weiterverarbeitungsvorrichtung 110 erhalten bleibt und so ein beschädigungssicheres, störungsfreies, schnelles, schonendes und einfaches Behandeln des Ernteguts 102 ermöglicht wird.

Die Weiterverarbeitungsvorrichtung 110 umfasst ferner einen Vorratsbehälter 124 für die Waschflüssigkeit 122, hier als Wassertank ausgebildet. Insbesondere ist dieser Vorratsbehälter 124 in einen außerdem eine Pumpeinrichtung umfassenden Pumpenkreislauf einbezogen, der einen Teil der Sprüheinrichtung 121 bildet und durch welchen den Sprühdüsen 120 die Waschflüssigkeit 122 zuführbar ist. Außerdem dient der Vorratsbehälter 124 zum Aufnehmen aus der Hauptwascheinheit 113 rückfließender Waschflüssigkeit 122 und umfasst Einrichtungen zu deren Reinigung, z.B. eine Filtereinrichtung und/oder eine Sedimentierungseinrichtung, sowie Vorrichtungen zur Entnahme des gefilterten bzw. sedimentierten Schmutzes, insbesondere der Erdreste, z.B. in der Art einer Abschlammeinrichtung. Diese sind der Einfachheit halber in der Zeichnung nicht dargestellt. Auch ist die Vorwascheinheit 112 aus dem Vorratsbehälter 124 nachspeisbar. Auf diese Weise wird ein durch Pfeile 125 symbolisierter Kreislauf für die Waschflüssigkeit 122 gebildet, der einerseits einen sparsamen Verbrauch von Waschflüssigkeit 122, andererseits aber deren hygienischen Zustand ermöglicht. Auf der Vorrichtung 100 muss daher nur ein geringer Vorrat an Waschflüssigkeit 122 mitgeführt werden, wodurch Gewicht gespart wird.

Das Schneiden der Feldfrüchte 102 auf vorbestimmte, verkaufsgerechte Abmessungen, z.B. auf vorbestimmte, verkaufsgerechte Längen bei Spargel, erfolgt bei der Vorrichtung 100 zwischen dem Vorwaschen und dem Hauptwaschen. Dies hat den Vorteil, dass beim Schneiden entstehender Abfall 126, z.B. der Spargelschnitt, nicht mitgewaschen werden muss. Außerdem werden bei dieser Reihenfolge der Weiterverarbeitung auch die Schnittflächen während des Hauptwaschens gesäubert, so dass das Erntegut 102 vollständig gereinigt in die Sortierung und Verpackung gefördert wird. Die Schneideeinrichtung 114 ist mit einer Auswerfeinrichtung 127 für die Abfälle 126, z.B. unbrauchbare Spargelreste und dergleichen, ausgebildet. Durch die Auswerfeinrichtung 127 werden die Abfälle 126 der Feldfrüchte 102 aufs Feld zurückgefördert, insbesondere fallen sie durch Schwerkraft einfach auf das Feld zurück.

Die ebenfalls vollautomatisch ausgebildete Sortiereinrichtung 115 entspricht im Prinzip bekannten stationären Anlagen dieser Art. Darin werden die Feldfrüchte 102 nach bestimmten Kriterien, wie Gewicht, Form oder Abmessungen, vorzugsweise in unterschiedliche Behältnisse 128 geführt. Eine solche Sortiereinrichtung enthält daher der Einfachheit halber in der Zeichnung nicht dargestellte Sensormittel zum Detektieren der genannten Kriterien, wie z.B. wenigstens eine Wiegeeinrichtung oder wenigstens ein optisches Erkennungsmittel zum Erfassen einer oder mehrerer bestimmter Abmessungen der Feldfrüchte 102, z.B. einen Durchmesser bei stangenförmigem Gemüse, oder zum Detektieren der Farbe der Feldfrüchte oder dergleichen. Die Sortiereinrichtung 115 umfasst weiterhin eine ebenfalls nicht dargestellte Steuerung und automatische Entnahmemittel bzw. Lenkmittel, um die vermessenen bzw. durch die Erkennungsmittel erfassten und einer vorbestimmbaren Sortierklasse zugeordneten Feldfrüchte 102 bevorzugt gemeinsam, z.B. in entsprechend zugeordnete Behältnisse, zu lenken und dort zu sammeln und der Verpackungseinrichtung 116 zuzuleiten. Derartige Entnahmemittel bzw. Lenkmittel sind z.B. mit Aufnahmeschalen für die Feldfrüchte 102 und Kippeinrichtungen zum Kippen der einzelnen Aufnahmeschalen und Entleeren in die den Sortierklassen zugeordneten Behältnisse ausgestaltet.

In einer Abwandlung ist die Sortiereinrichtung 115 mit einer weiteren Auswerfeinrichtung ausgebildet, sofern je nach Art und Beschaffenheit der geernteten Feldfrüchte 102 auch nach dem händischen Ernten und der voraufgehenden Weiterbearbeitung noch damit gerechnet werden muss, dass bei der Sortierung Feldfrüchte 102 anfallen, die als nicht verwertbar auszusondern sind. Diese weitere Auswerfeinrichtung ist vorteilhaft ebenfalls dazu ausgebildet, die nicht verwertbaren Feldfrüchte 102 auf das Feld zurück zu fördern.

Auch die sich an die Sortiereinrichtung 115 anschließende Verpackungseinrichtung 116 ist vollautomatisch ausgestaltet. Wie vorstehend angegeben erfolgt darin ein bevorzugt vollautomatisches Verpacken der sortierten Feldfrüchte 102 in Verkaufsverpackungen und/oder Transportbehältnisse, z.B. Schachteln, Bunde, Kästen. In den Figuren 1 und 3 sind grob schematisch Kästen 129 dargestellt, die in der Verpackungseinrichtung 116 mit geernteten Feldfrüchten 102 gefüllt werden und hier Transportbehältnisse für einen Abtransport des Ernteguts bilden. Den Durchlauf des Ernteguts 102 durch die Sortiereinrichtung 115 und die Verpackungseinrichtung 116 bis zum Verpacken in den Kästen 129 symbolisieren in Figur 1 Pfeile 130.

Durch die Kopplung der Vorrichtung 100 an den Ackerschlepper 108 wird ein eigenes Antriebsaggregat auf der Vorrichtung 100 eingespart, welches anderenfalls wenigstens zu deren Fortbewegung während des Erntevorgangs benötigt wird. Der Schlepper 108 weist dazu als Anhänge- bzw. Anbauvorrichtung hier vorteilhaft einen Geräteträger 131 für landwirtschaftliches Gerät auf, wie er z.B. für Pflüge, Düngerstreuer, Drillmaschinen, Pflanzgeräte, Mähgeräte oder dergleichen vorgesehen ist. An diesem Geräteträger 131 ist die Vorrichtung 100 befestigt.

Vorteilhaft ist die Vorrichtung 100 am Geräteträger 131 des Schleppers 108 auch hochklappbar angeordnet, bevorzugt durch eine hydraulische Hebeeinrichtung 132 des Geräteträgers 131. Damit lässt sich ein Manövrieren des Schleppers 108 mit angebauter Vorrichtung 100 erleichtern. Der durch den Schlepper 108 und die Vorrichtung 100 gebildete Schleppzug erhält dadurch wenigstens nahezu die gleiche Wendigkeit wie der leerfahrende Schlepper 108. Dies ist von großem Vorteil beim Wenden auf dem Vorgewende eines abzuerntenden Feldes. Das Hochklappen der Vorrichtung 100 ist dabei nur soweit auszuführen, dass zwar eine Kollision mit den Reihen 101 der Feldfrüchte 102, z.B. mit Spargeldämmen, sicher vermieden wird, es aber nicht zu Betriebsbeeinträchtigungen an der Vorrichtung 100, z.B. noch nicht zum Austreten von Waschflüssigkeit 122 aus der Wascheinrichtung 111 oder zu betriebsstörender Verlagerung noch in der Vorrichtung 100 befindlicher Feldfrüchte 102, kommen kann.

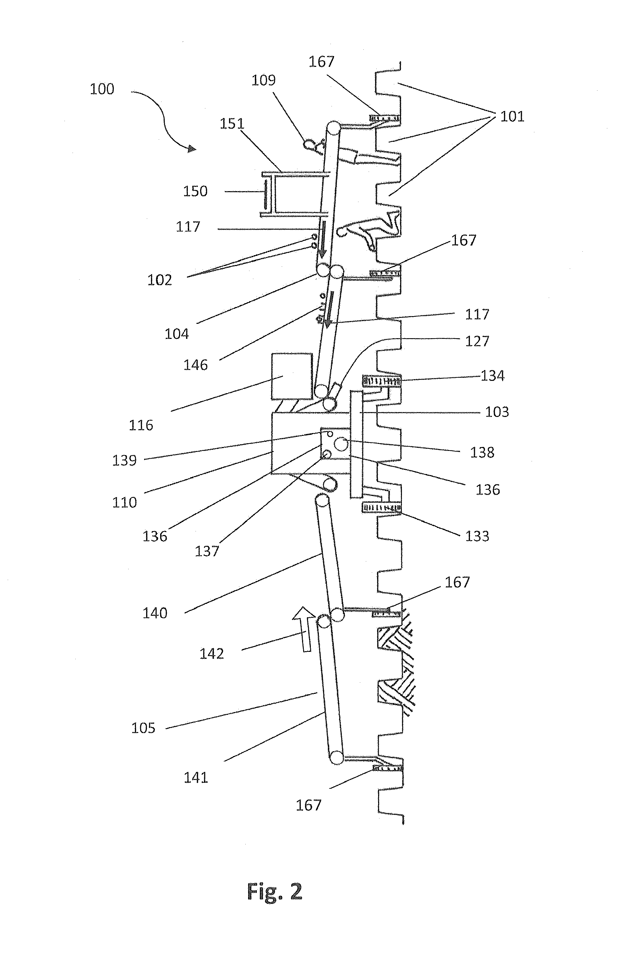

Die Vorrichtung 100 weist außerdem zum teilweisen Entlasten des Schleppers 108 ein eigenes, jedoch sehr einfach ausgeführtes Fahrwerk auf, das hier lediglich zwei lenkbare Stützräder umfasst, von denen das rechte 133 in Figur 1, das linke 134 in Figur 3 und beide in Figur 2 schematisch dargestellt sind. Die Stützräder 133, 134 sind nahe einem hinteren, vom Schlepper 108 abgewandten Ende der Vorrichtung 100 angeordnet und als Nachläufer ausgebildet, deren Laufrichtung sich nach der Fahrtrichtung des Schleppers 108 passiv einstellt, wobei diese Einstellbewegung in Figur 1 durch einen Doppelpfeil 135 symbolisiert ist. Dies ermöglicht auch bei Unebenheiten des Feldes eine ruhigere Fortbewegung der Vorrichtung 100, da ein Schwanken des Schleppfahrzeugs weniger stark auf die Vorrichtung übertragen wird. Außerdem sind die Stützräder 133, 134 an der Vorrichtung 100 einfahrbar bzw. anhebbar ausgebildet, so dass insbesondere nur die Stützräder 133, 134 zum Wenden des Schleppzugs 108, 100 eingefahren werden, ohne den Zentralbereich 103 hochklappen zu müssen, wodurch die Betriebssicherheit erhöht wird.

Die Vorrichtung 100 umfasst ferner eine Kopplungseinrichtung 136, vorgesehen zum Koppeln der Vorrichtung 100 mit einem Hydraulikkreis und einer Zapfwelle des Schleppers 108, zum Übertragen von Antriebsenergie vom Schlepper 108 auf die Vorrichtung 100 und darin wenigstens auf die Querfördereinrichtungen 104, 105 und/oder die Weiterverarbeitungsvorrichtung 110. Damit kann ein eigenes Antriebsaggregat auf der Vorrichtung 100 nicht nur für deren Bewegung über das Feld, sondern auch zum Betreiben der Querfördereinrichtungen 104, 105 und der Weiterverarbeitungsvorrichtung 110 bzw. deren einzelne Bestandteile bzw. Baugruppen, z.B. die Waschfördereinrichtung 118, usw., entfallen, wodurch eine beträchtliche Kostenreduktion erzielt wird.

Besonders vorteilhaft erfolgt dabei ein unmittelbarer Anschluss der von der Vorrichtung 100 umfassten Bestandteile bzw. Baugruppen, d.h. insbesondere der Querfördereinrichtungen 104, 105 und der Weiterverarbeitungsvorrichtung 110, an einen oder mehrere Hydraulikanschlüsse des Schleppers 108, wobei in der Zeichnung der Einfachheit halber nur ein Hydraulikanschluss 137 schematisch dargestellt ist. Daneben ist auch ein Zapfwellenanschluss 138 symbolisiert, der wahlweise oder zusätzlich vorgesehen sein kann. Zur Ausbildung des direkten Hydraulikanschlusses 137 sind die von der Vorrichtung 100 umfassten Bestandteile bzw. Baugruppen vorteilhaft hydraulisch betrieben. Ein derartiger direkter Hydraulikanschluss 137 spart die Ausstattung der Vorrichtung 100 mit einer eigenen Hydraulikpumpe und ist noch universeller, leichter und einfacher gestaltbar als ein Zapfwellenanschluss 138; damit ist ferner eine flexiblere Gestaltung von Antrieben auf der Vorrichtung 100 möglich.

Vorteilhaft ist die Kopplungseinrichtung 136 wahlweise oder zusätzlich mit einer elektrischen Energieabgabevorrichtung, d.h. bevorzugt mit einem Anschluss 139 an ein elektrisches Bordnetz des Schleppers 108, ausgebildet, so dass die von der Vorrichtung 100 umfassten Bestandteile bzw. Baugruppen oder zumindest einige derselben auch unmittelbar elektrisch angetrieben werden können.

Die Längsabmessungen der Querfördereinrichtungen 104, 105 sind an die durch Erntebedingungen der Feldfrüchte 102 beeinflusste Erntebreite 107 anpassbar. Dazu umfassen die Querfördereinrichtungen 104, 105 je eine innere Teilfördereinrichtung 140, die sich unmittelbar an den Zentralbereich 103 anschließt, und eine sich an die innere Teilfördereinrichtung 140 anschließende äußere Teilfördereinrichtung 141. Die Teilfördereinrichtungen 140, 141 sind mit je einem eigenen Fördermittel, wie z.B. einem Förderband, einer Förderkette oder dergleichen ausgestaltet und gegeneinander längs der Förderrichtung 117 der Querfördereinrichtungen 104, 105 verschiebbar und/oder gegenüber dem Zentralbereich 103 verschiebbar und/oder verschwenkbar ausgebildet. Die Verschiebbarkeit ist durch Pfeile 142 und die Verschwenkbarkeit durch Pfeile 143 angedeutet und stufenlos möglich. Die Verschwenkbarkeit der Teilfördereinrichtungen 140, 141 gegeneinander und gegenüber dem Zentralbereich 103 ist um im Wesentlichen quer zur Förderrichtung 117 der Querfördereinrichtungen 104, 105 verlaufende, um bezüglich einer Betriebsstellung der Querfördereinrichtungen 104, 105 im Wesentlichen senkrechte Drehachsen 144 bzw. 145 ausgebildet. Das Verschwenken der Teilfördereinrichtungen 140, 141 erfolgt dabei gegensinnig zueinander. Dieses Verschwenken um senkrechte Drehachsen wird beim Wenden auf dem Vorgewende, auf einem Spargelfeld auch als Dammwechsel bezeichnet, bevorzugt.

Wahlweise ist auch eine Verschwenkbarkeit um im Wesentlichen waagerechte Drehachsen möglich. Zum Ausführen des Verschiebens 142 und/oder Verschwenkens 143 sind in der Zeichnung nicht dargestellte mechanische und/oder hydraulische Antriebsmittel vorgesehen, die bevorzugt mit Hydraulikmotoren und/oder Hydraulikzylindern mit passenden mechanischen Getrieben ausgebildet sind. In Abwandlungen sind die Antriebsmittel elektrisch betrieben, z.B. aus dem Bordnetz des Schleppers 108, oder sie sind über den Zapfwellenanschluss 138 betrieben. Durch die Schwenk- bzw. Einklappbarkeit der Querfördereinrichtungen 104, 105 benötigt der Schleppzug aus Schlepper 108 und Vorrichtung 100 beim Wenden auf dem Vorgewende am Ende des Feldes und damit der Reihen 101 der Feldfrüchte 102, aber auch auf einem Straßentransport, wenig Platz.

Durch diese Variationsmöglichkeit ist eine flexible Anpassung auch an die Größe der Landwirtschafts- oder Gartenbaubetriebe möglich, von denen die Vorrichtung 100 eingesetzt wird. Darüber hinaus können weitere Dimensionierungs- bzw. Anpassungsmöglichkeiten bzw. -mittel vorgesehen sein, z.B. solche, die eine Anpassung an eine Wuchshöhe der Feldfrüchte 102 und/oder Arbeitshöhe der Erntearbeiter 109 gestatten. Ferner ist jede der Querfördereinrichtungen 104, 105 mit je zwei Leiträdern 167 ausgestattet, durch welche Leiträder 167 die Querfördereinrichtungen 104, 105 während des Erntevorgangs gegen den Erdboden des Feldes abgestützt werden. Dadurch wird zum einen auch beim Durchfahren von Bodenunebenheiten auf dem Feld eine wenigstens nahezu konstante Arbeitshöhe für die Erntearbeiter 109 eingehalten und damit die Arbeit für die Erntearbeiter 109 leichter und sicherer, zum anderen werden dadurch Aufhänge- und/oder Schwenkvorrichtungen, mit denen insbesondere die inneren Teilfördereinrichtungen 140 am Zentralbereich 103 angeordnet sind, aber auch solche zum Verbinden der äußeren Teilfördereinrichtungen 141 mit den inneren Teilfördereinrichtungen 140, entlastet. Bevorzugt sind die Leiträder an oder nahe äußeren Enden der inneren bzw. der äußeren Teilfördereinrichtungen 140 bzw. 141 an diesen angeordnet und z.B. für einen Straßentransport der Vorrichtung 100 klappbar ausgebildet.

Im dargestellten Ausführungsbeispiel sind die Querfördereinrichtungen 104, 105 mit Mitteln zum Ausrichten der geernteten Feldfrüchte 102 versehen, die hier beispielsweise als Teilung 146 ausgebildet sind. Diese Teilung ist z.B. mit Stegen oder Noppen auf den Querfördereinrichtungen 104, 105 ausgestaltet, die Aufnahmebereiche zum Aufnehmen und/oder Ausrichten der Feldfrüchte 102 in eine definierte Lage bilden und durch die die Feldfrüchte 102 beim Auflegen durch die Erntearbeiter oder während des Förderns in die definierte Lage auf den Querfördereinrichtungen 104, 105 gebracht und dort während des Förderns in dieser definierten Lage geführt werden. Wahlweise ist dazu die Teilung 146 auf den Querfördereinrichtungen 104, 105 bereits dort angeordnet, wo die Feldfrüchte 102 von den Erntearbeitern 109 auf die Querfördereinrichtungen 104, 105 gelegt werden, d.h. sowohl auf der bevorzugt als Förderband ausgebildeten inneren Teilfördereinrichtung 140 als auch auf der ebenfalls bevorzugt als Förderband ausgebildeten äußeren Teilfördereinrichtung 141, so dass dieses Auflegen gleich in der für die Behandlung der Feldfrüchte 102 in einer in der Weiterverarbeitungsvorrichtung vorgesehenen richtigen Ausrichtung erfolgt, oder die Teilung 146 ist entlang der Querfördereinrichtungen 104, 105 erst näher am Zentralbereich 103 vorgesehen, insbesondere nur auf den inneren Teilfördereinrichtungen 140.

An der Vorrichtung 100 sind am Zentralbereich 103 Entlademittel, bevorzugt automatisierte Entlademittel, vorgesehen zum automatisierten Absetzen und/oder Überladen von der Weiterverarbeitungsvorrichtung 110 abgegebener, insbesondere verpackter Feldfrüchte 102, vom Zentralbereich 103, insbesondere von der Weiterverarbeitungsvorrichtung 110, bevorzugt von der Verpackungseinrichtung 116, vorzugsweise auf ein Transportmittel. Als ein derartiges Transportmittel dient insbesondere ein Fahrzeug, mit dem die geernteten, weiterverarbeiteten und insbesondere verpackten Feldfrüchte 102 vom Feld abtransportiert und einem Vertrieb bzw. einer Vermarktung zugeführt werden, z.B. ein Lastkraftwagen, ein Schlepper mit Anhänger, oder dergleichen. Die Entlademittel sind in der Zeichnung nicht im Detail dargestellt, sondern in den Figuren 1 und 3 nur durch einen Pfeil 147 und einen vom Zentralbereich 103 entnommenen Kasten 148 mit geernteten und weiterverarbeiteten Feldfrüchten 102 angedeutet.

In einer nicht dargestellten Abwandlung ist die Vorrichtung 100 mit einer Anhängevorrichtung für einen Anhänger oder dergleichen ausgestattet, der während des Erntevorgangs vom Schlepper hinter der Vorrichtung 100 mit über das Feld gezogen wird und dadurch kontinuierlich zum Aufnehmen der geernteten, weiterverarbeiteten und insbesondere verpackten Feldfrüchte 102 verfügbar ist. Gemäß einer anderen Abwandlung sind die Entlademittel zum Absetzen der geernteten, weiterverarbeiteten und insbesondere verpackten Feldfrüchte 102 auf dem Erdboden des Feldes ausgebildet, wo die Feldfrüchte 102, z.B. in Kästen 148 verpackt, vorübergehend zwischengelagert werden können zum späteren Aufnehmen durch ein Transportmittel der vorgenannten Art. Weiter bevorzugt ist auf dem Zentralbereich 103 der Vorrichtung 100 ein Zwischenlager 149 für eine bestimmte Menge auf ein solches Transportmittel überzuladender, insbesondere in Kästen 129 verpackter Feldfrüchte 102 vorgesehen, um den Abtransport flexibler und leichter handhabbar gestalten zu können.

Die Vorrichtung 100 weist ferner - bevorzugt für jede der zugleich abzuerntenden, von der Erntebreite umfassten Reihen 101 der Feldfrüchte 102 - eine Einrichtung zum zeit- bzw. abschnittsweisen, automatischen Anheben und anschließenden automatischen Wiederaufbringen eines zum Überdecken der Reihen 101 der Feldfrüchte 102 ausgebildeten, folienbahnförmigen Schutzmittels 150. Anders ausgedrückt erfolgt das Anheben und Wiederaufbringen des Schutzmittels 150 entlang eines bestimmten, mit der Vorrichtung 100 sich während des Erntevorgangs bewegenden Streckenabschnitts der Reihen 101. In dem Streckenabschnitt der Reihe 101 der Feldfrüchte 102, innerhalb dessen das Schutzmittel 150 abgedeckt ist, findet der Erntevorgang durch die Erntearbeiter 109 statt. Ein derartiges Schutzmittel dient allgemein zum Schutz der Feldfrüchte vor Witterungseinflüssen der unterschiedlichsten Arten; z.B. wird bei Spargelreihen mit weißem Spargel als Feldfrüchte 102 eine Lichtschutzfolie über die Spargeldämme gedeckt, um zu verhindern, dass sich die Spitzen der Spargelstangen nach Durchbrechen der Erdoberfläche durch Lichteinfall verfärben. Die in den Figuren 1 und 2 schematisch und der Einfachheit halber nur für eine der Reihen 101 der Feldfrüchte 102 dargestellte Einrichtung zum zeit- und/oder abschnittsweisen, automatischen Anheben und anschließenden automatischen Wiederaufbringen des folienbahnförmigen Schutzmittels 150 wird daher hier als Folienheber 151 bezeichnet. Die Folienheber 151 sind vorteilhaft auf den Querfördereinrichtungen 104, 105 so hoch aufgeständert angeordnet, dass die Erntearbeiter 109 darunter sowie unter den von den Folienhebern 151 angehobenen Folien 150 Platz zum Arbeiten haben.

Mit der beschriebenen Vorrichtung 100 ist vorteilhaft ein Verfahren zum Ernten von in Reihen 101 angebauten Feldfrüchten 102, hier von Spargel, ausführbar, wobei dieses Verfahren die folgenden Verfahrensschritte umfasst:
- händisches Ernten der Feldfrüchte 102, hier Stechen von Spargelstangen, durch Erntearbeiter 109 und
- händisches Ablegen der geernteten Feldfrüchte 102 auf einer der Querfördereinrichtungen 104, 105 durch die Erntearbeiter 109,
- automatisches Fördern der geernteten Feldfrüchte 102 durch die Querfördereinrichtungen 104, 105 zur Weiterverarbeitungsvorrichtung 110,
- in der Vorwascheinheit 112 der Weiterverarbeitungsvorrichtung 110 automatisches Vorwaschen der geernteten Feldfrüchte 102,
- in der Schneideeinrichtung 114 der Weiterverarbeitungsvorrichtung 110 automatisches Schneiden der Feldfrüchte 102; hier: Schneiden der Spargelstangen auf einheitliche Verkaufslänge,
- in der Hauptwascheinheit 113 der Weiterverarbeitungsvorrichtung 110 automatisches Hauptwaschen der Feldfrüchte 102,
- in der Sortiereinrichtung 115 der Weiterverarbeitungsvorrichtung 110 automatisches Sortieren der Feldfrüchte 102,
- in der Verpackungseinrichtung 116 der Weiterverarbeitungsvorrichtung 110 automatisches Verpacken der Feldfrüchte 102, hier in Kästen 129, und
- mit einem sich an die Weiterverarbeitungsvorrichtung 110 anschließenden Entlademittel 147, 148 Entladen der Feldfrüchte 102.

Diese Verfahrensschritte werden vorteilhaft mit der Vorrichtung (100) durchgeführt. Die Ausführung aller beschriebenen Verfahrensschritte erfolgt unmittelbar auf dem Feld, auf dem die Feldfrüchte 102 angebaut sind. Dadurch können entsprechende stationäre Anlagen eingespart werden, womit ein ortsungebundener Einsatz für die Weiterverarbeitung ermöglicht wird. Damit ist eine kostengünstige und flexible Weiterverarbeitung ohne Verlängerung von Transportwegen und Transportzeiten auch bei einem Ortswechsel der Vorrichtung 100 zu verschiedenen Feldern oder Anbaugebieten möglich. Die Feldfrüchte 102 können ab Feld sofort zur Vermarktung gebracht werden, ohne vorher den Weg über eine ggf. abgelegene, stationäre Anlage zur Weiterverarbeitung nehmen zu müssen.

In einer Abwandlung des vorstehend beschriebenen und in der Zeichnung grob schematisch dargestellten Ausführungsbeispiels der Vorrichtung 100 ist eine Fördereinrichtung auch für die mittleren, vom Zentralbereich 103 überspannten Reihen 101 der Feldfrüchte 102 vorgesehen und z.B. als Längsfördereinrichtung ausgebildet, deren Förderrichtung sich im Wesentlichen in der Fahrtrichtung 106 der Vorrichtung 100 während des Erntevorgangs erstreckt, Diese Längsfördereinrichtung mündet z.B. in die Vorwascheinheit 112 oder auf die Querfördereinrichtungen 104, 105. Um die Erntearbeiter 109 beim Ernten in den mittleren, vom Zentralbereich 103 überspannten Reihen 101 der Feldfrüchte 102 nicht zu behindern, sind die Entlademittel dann bevorzugt zum seitlichen Absetzen oder Übergeben der von der Weiterverarbeitungsvorrichtung 110 abgegebenen, insbesondere verpackten Feldfrüchte 102 ausgestaltet.

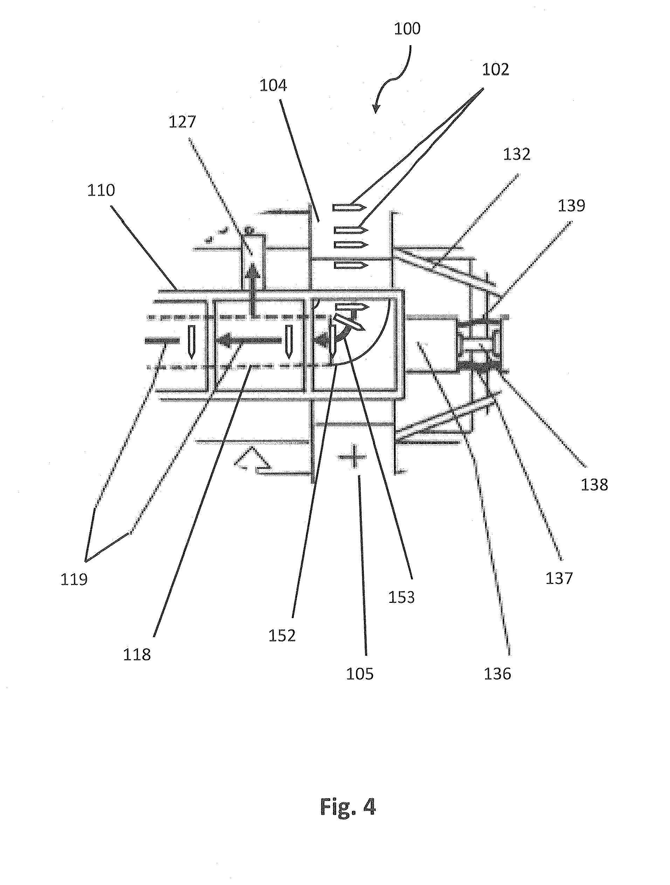

In Figur 4 ist eine Ausschnittvergrößerung aus Figur 1 mit einer grob schematischen Darstellung einer Abwandlung des Ausführungsbeispiels der erfindungsgemäßen Vorrichtung 100 nach den Figuren 1 bis 3 wiedergegeben. Dargestellt ist der in der Fahrtrichtung 106 vordere Bereich der Weiterverarbeitungsvorrichtung 110. Hier ist anstelle der Vorwascheinheit 112 aus Figur 1 nun eine Übergabeeinrichtung 152 angeordnet. Damit ist die Wascheinrichtung 111 einstufig mit ausschließlich einer Hauptwascheinheit 113 ausgebildet. Die Übergabeeinrichtung 152 ist zum Fördern des Ernteguts, d.h. der Feldfrüchte 102, von den Querfördereinrichtungen 104, 105 auf die Waschfördereinrichtung 118 ausgebildet. Die Übergabeeinrichtung 152 ist vorteilhaft mit zwei 90°-Förderkurven ausgestaltet, von denen je eine an je eine der Querfördereinrichtungen 104 bzw. 105 anschließt. Von diesen beiden 90°-Förderkurven ist der Übersichtlichkeit halber nur diejenige dargestellt, die an die Querfördereinrichtung 104 anschließt, d.h. die Feldfrüchte 102 von dieser Querfördereinrichtung 104 auf die Waschfördereinrichtung 118 fördert. Dabei werden, wie in Figur 4 angedeutet, die Feldfrüchte 102 in ihrer räumlichen Ausrichtung um wenigstens nahezu 90° gedreht. Die Änderung der Förderrichtung 117, 119 und der räumlichen Ausrichtung der Feldfrüchte 102 ist auch durch einen gebogenen Pfeil 153 symbolisiert. Obgleich die Querfördereinrichtungen 104 und die Waschfördereinrichtung 118 unterschiedliche Förderrichtungen 117, 119 aufweisen, die Feldfrüchte 102 somit bei der Übergabe durch die Übergabeeinrichtung 152 eine Änderung der Förderrichtung 117, 119 durchlaufen müssen, wird so ein einwandfreies Fördern der Feldfrüchte 102 auch für den dargestellten Fall gewährleistet, in dem die Feldfrüchte 102, d.h. hier: Spargel, in einer vorgegebenen Ausrichtung gegenüber der Förderrichtung 117, 119, d.h. wenigstens nahezu rechtwinklig dazu, gefördert werden müssen.

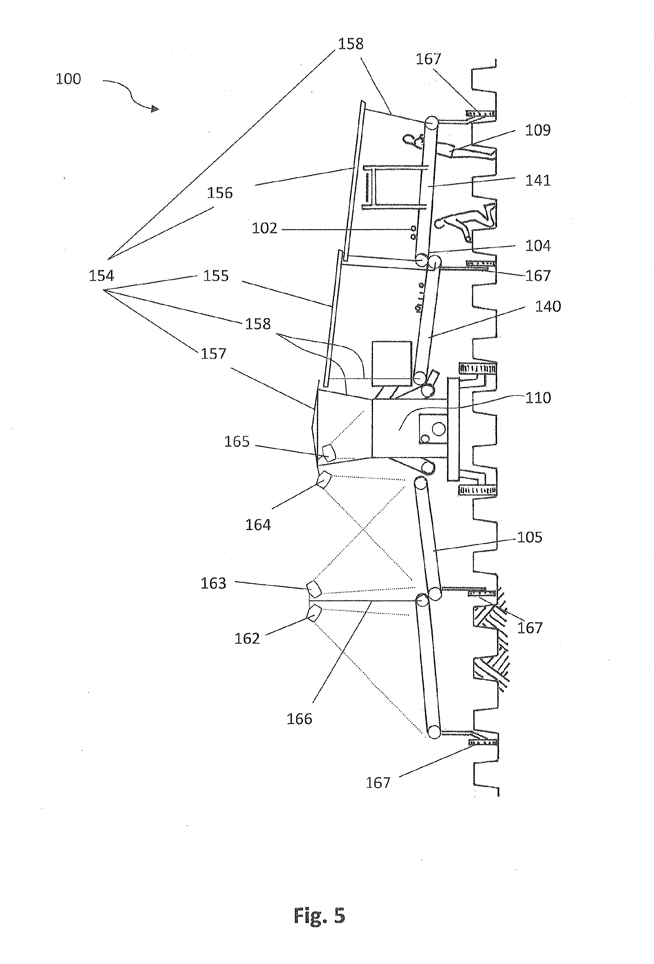

Figur 5 zeigt in einer Abwandlung der Figur 2 eine grob schematischen Darstellung einer weiteren Abwandlung des Ausführungsbeispiels der erfindungsgemäßen Vorrichtung 100 nach den Figuren 1 bis 3, die mit einer Witterungsschutzeinrichtung 154 ausgebildet ist, die insbesondere als Sonnenschutzeinrichtung ausgestaltet ist und zum Schützen der Vorrichtung 100, der Feldfrüchte 102 und der Erntearbeiter 109 vor Witterungseinflüssen, insbesondere vor Sonneneinstrahlung, dient. Die Witterungsschutzeinrichtung 154 nach dem in Figur 5 dargestellten Beispiel mit aufgeständerten Sonnenschutzdächern ausgeführt, und zwar trägt jede der Teilfördereinrichtungen 140, 141 der Querfördereinrichtungen 104, 105 sowie der Zentralbereich 103 je ein Sonnenschutzdach 155, 156 bzw. 157. Der Einfachheit halber sind nur die Sonnenschutzdächer 155, 156 der Teilfördereinrichtungen 140, 141 der Querfördereinrichtung 104 und das Sonnenschutzdach 157 des Zentralbereichs 103 wiedergegeben. Die Sonnenschutzdächer 155, 156 der Teilfördereinrichtungen 140, 141 der Querfördereinrichtungen 104, 105 sind bevorzugt voneinander und vom Sonnenschutzdach 157 des Zentralbereichs 103 getrennt und derart ausgebildet, dass sie ein Verschieben und/oder Verschwenken der Teilfördereinrichtungen 140, 141 gegeneinander und/oder gegenüber dem Zentralbereich 103 wenigstens weitgehend nicht behindern. Insbesondere sind dazu die Die Sonnenschutzdächer 155, 156 der Teilfördereinrichtungen 140, 141 derart unterschiedlich hoch und breit bemessen, dass sie sich beim Verschieben der Teilfördereinrichtungen 140, 141 gegeneinander übereinander schieben. In einer Abwandlung können die Sonnenschutzdächer 155, 156 der Teilfördereinrichtungen 140, 141 auch einstückig und beim Verschieben der Teilfördereinrichtungen 140, 141 gegeneinander faltbar ausgebildet sein. Die Sonnenschutzdächer 155, 156, 157 sind auf Stützen 158 aufgeständert, die bevorzugt so angeordnet sind, dass sie das Verschieben und/oder Verschwenken der Teilfördereinrichtungen 140, 141 nicht behindern. Die Stützen 158 sind z.B. an einem Gehäuse der Weiterbehandlungsvorrichtung 110 bzw. an Trageinrichtungen, z.B. Tragrahmen, der Förderbänder der Teilfördereinrichtungen 140, 141 befestigt oder angelenkt, z.B. einklappbar angelenkt.

In einer weiteren Abwandlung der Figur 2 zeigt Figur 5 Beleuchtungseinrichtungen 162, 163, 164, 165, die wahlweise oder in Kombination mit der vorbeschriebenen Witterungsschutzeinrichtung 154 vorgesehen sind. Die Beleuchtungseinrichtungen 162, 163, 164, 165 sind wahlweise am Zentralbereich 103 und/oder wenigstens einer der Querfördereinrichtungen 104, 105 angeordnet. In der Darstellung der Figur 5 sind der Einfachheit halber nur die Beleuchtungseinrichtungen 162, 163, 164, 165 am Zentralbereich 103 und der Querfördereinrichtung 105 eingezeichnet. Bevorzugt sind Beleuchtungseinrichtungen 162, 163, 164, 165 jedoch derart angeordnet, dass sowohl beide Querfördereinrichtungen 104, 105 und der Zentralbereich 103 als auch in deren unmittelbarer Umgebung das Feld mit den Reihen der Feldfrüchte in dem Umfang ausgeleuchtet ist, dass alle Arbeitsplätze der an der erfindungsgemäßen Vorrichtung beschäftigten Feldarbeiter für die Ausführung des Erntevorgangs hinreichend mit Licht versehen sind. Dazu zeigt Figur 5 als Beispiel eine Anordnung je einer der Beleuchtungseinrichtungen 162, 163 an einem an einer Verbindungsstelle zwischen der inneren Teilfördereinrichtung 140 und der äußeren Teilfördereinrichtung 141 angeordneten Lichtmast 166 zur Ausleuchtung der inneren Teilfördereinrichtung 140 bzw. der äußeren Teilfördereinrichtung 141. Als weiteres Beispiel sind die Beleuchtungseinrichtungen 164, 165 an einer der Stützen 158 des Sonnenschutzdachs 157 angeordnet zur Ausleuchtung des Zentralbereichs 103 bzw. der inneren Teilfördereinrichtung 140, so dass die Stütze 158 zugleich als Lichtmast dient und durch diese Kombination von Witterungsschutzeinrichtung 154 und Beleuchtungseinrichtungen 162, 163, 164, 165 eine einfache und universell nutzbare Anordnung gebildet ist. Damit kann der Erntevorgang auch bei ungünstigen bzw. ungenügenden natürlichen Lichtverhältnissen, insbesondere nachts, durchgeführt werden.

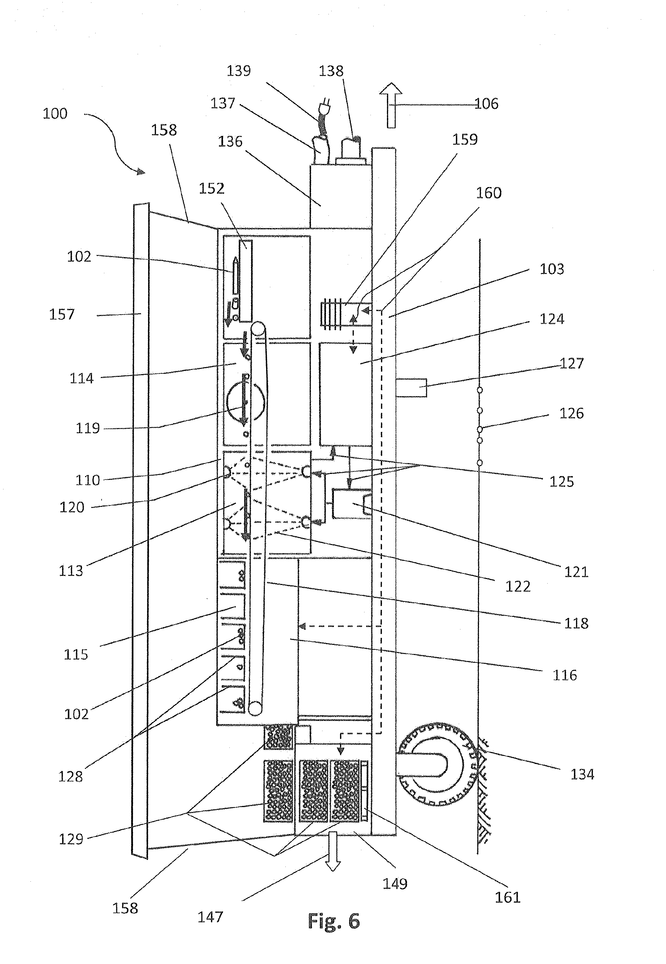

In Figur 6 ist in einer Abwandlung der Figur 3 eine grob schematische Darstellung einer Abwandlung des Ausführungsbeispiels der erfindungsgemäßen Vorrichtung nach den Figuren 1 bis 3 wiedergegeben, in der außer der Übergabeeinrichtung 152 und der Witterungsschutzeinrichtung 154 mit dem Sonnenschutzdach 157 eine Kühlvorrichtung 159 zum Kühlen der Feldfrüchte 102 vorgesehen ist. Die Kühlvorrichtung 159 ist mit einer Kältemaschine ausgebildet, die über die Kopplungseinrichtung 136 der Vorrichtung 100 vom Ackerschlepper 108 betrieben wird, z.B. über den Hydraulikanschluss 137 oder den Zapfwellenanschluss 137, bevorzugt jedoch über den Anschluss 139 an das elektrische Bordnetz des Ackerschleppers 108. Die Kältemaschine kann z.B. Eis erzeugen, auf dem die Feldfrüchte 102 zur Kühlung gelagert werden können. Im dargestellten Ausführungsbeispiel ist die Kühlvorrichtung 159 jedoch durch Kälteübertragungsmittel 160, bevorzugt mit Kühlmedium führenden Leitungen ausgebildet, mit den Einrichtungen der Vorrichtung 100 verbunden, in denen eine Kühlung der Feldfrüchte 102 vorgenommen werden soll. Dies sind hier zunächst der Vorratsbehälter 124 für die Waschflüssigkeit 122, mit der die Feldfrüchte 102 in der Wascheinrichtung 111, d.h. der Hauptwascheinheit 113, gereinigt werden, sowie die Sortiereinrichtung 115 und die Verpackungseinrichtung 116. Die Schneideeinrichtung 114 ist hier nicht gesondert gekühlt, da diese von den Feldfrüchten 102 sehr schnell durchlaufen wird; es kann jedoch auch hier eine Kühlung vorgesehen sein.

Bei der Abwandlung der erfindungsgemäßen Vorrichtung 100 gemäß Figur 6 ist weiterhin das Zwischenlager 149 für eine bestimmte Menge auf ein Transportmittel überzuladender, insbesondere in Kästen 129 verpackter Feldfrüchte 102 vorteilhaft als gekühlter Lagerraum ausgestaltet und dazu über das Kälteübertragungsmittel 160, d.h. eine oder mehrere ein Kühlmedium führende Leitungen, an die Kühlvorrichtung 159 angeschlossen.

Ferner ist im Rahmen einer Weiterbildung vorgesehen, eine Anzahl der Kästen 129 gemeinsam auf einer Palette 161 zu einem Kollo zusammenzufassen bzw. zu stapeln, um den Abtransport der Feldfrüchte 102 noch flexibler und leichter handhabbar gestalten zu können. Ein oder mehrere dieser Kolli können dann im Lagerraum 149 gekühlt zwischengelagert werden. Die Entlademittel 147 sind hier zum Überladen ganzer Kolli auf das Transportmittel ausgestaltet.

Eine Kühlvorrichtung 159 ist weiterhin auch auf der erfindungsgemäßen Vorrichtung 100 in der Ausführung gemäß Figuren 1 bis 3 einsetzbar. Dabei ist es möglich, zusätzlich die Feldfrüchte 102 in der Vorwascheinheit 112 in einfacher Weise dadurch zu kühlen, dass wie beschrieben die Waschflüssigkeit 122, mit der die Feldfrüchte 102 in der Wascheinrichtung 111 gereinigt werden, im Vorratsbehälter 124 gekühlt und über den Kreislauf 125 auch zwischen dem Vorratsbehälter 124 der Vorwascheinheit 112 ausgetauscht wird. Auch ist eine unmittelbare Kühlung der Waschflüssigkeit 122 in der Vorwascheinheit 112 möglich.

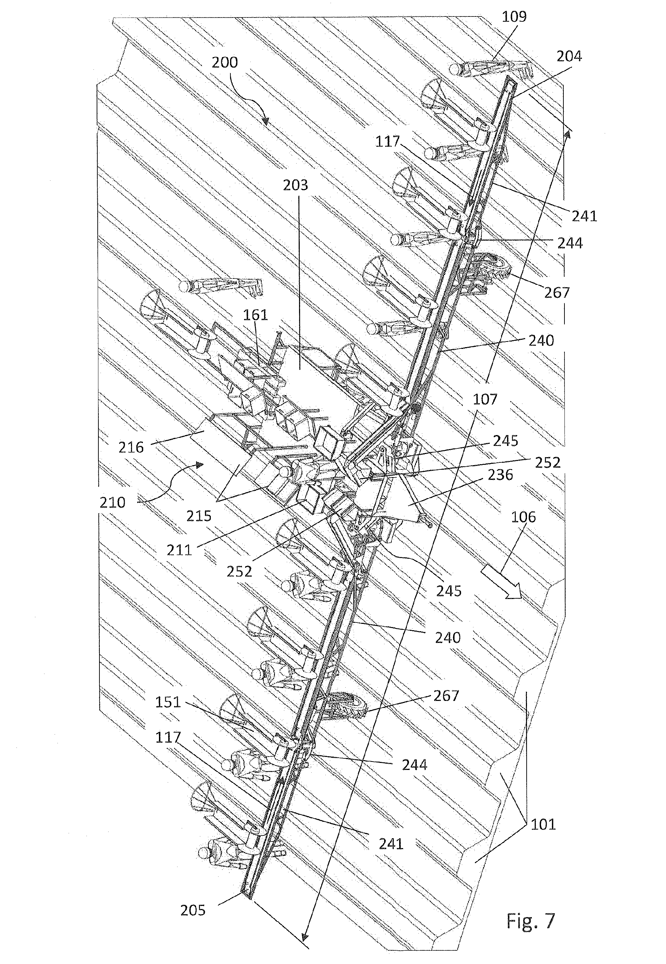

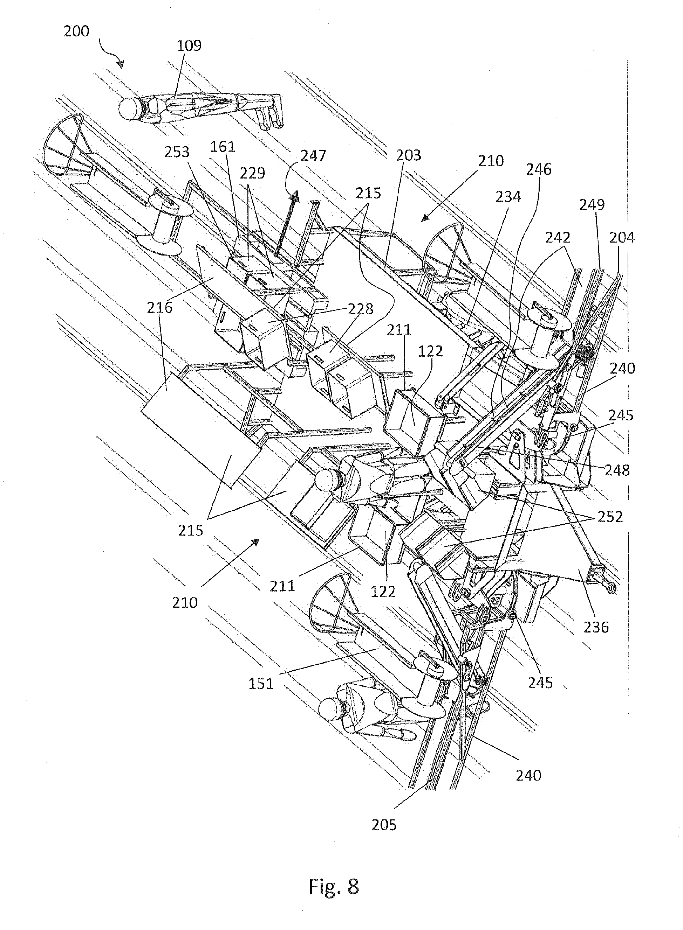

In Figur 7 ist eine isometrische Ansicht eines weiteren Ausführungsbeispiels einer mit dem Bezugszeichen 200 bezeichneten erfindungsgemäßen Vorrichtung in einer schematischen Darstellung wiedergegeben; Figur 8 zeigt dazu in einer Ausschnittvergrößerung aus der Darstellung von Figur 7 insbesondere einen eine Arbeitsplattform bildenden Zentralbereich 203 dieser Vorrichtung 200. Der Zentralbereich 203 der Vorrichtung 200 ist hier als zweirädriger, eine Reihe 101 von Feldfrüchten 102 überspannender Anhänger mit Rädern 234 und einer Zugvorrichtung bzw. Deichsel 236 ausgebildet zum Schleppen durch ein Zugfahrzeug, insbesondere einen hier nicht dargestellten Ackerschlepper, während des Erntevorgangs in Fahrtrichtung 106. Die Zugvorrichtung 236 ist insbesondere in an sich üblicher, normgerechter Ausführung mit einer Zugöse gestaltet zum Kuppeln mit einer entsprechend genormten Zugvorrichtung des Zugfahrzeugs. Dadurch ist die Vorrichtung 200 bei einfachem Aufbau ebenfalls einfach hantierbar, sowohl während des Erntevorgangs als auch bei einem Umsetzen über Verkehrswege, d.h. einem Straßentransport. Bevorzugt ist die Vorrichtung 200 nach diesem Ausführungsbeispiel eingerichtet zum Ernten von Spargel als Feldfrüchte 102, jedoch kann die Vorrichtung 200 auch für ein Ernten anderer Feldfrüchte 102 angepasst und/oder abgewandelt und/oder eingerichtet werden.

Die Vorrichtung 200 weist zwei motorisch betriebene Querfördereinrichtungen 204 bzw. 205 auf, die nach entgegengesetzten Seiten des Zentralbereichs 203 vorstehend an diesem angeordnet sind. Zusammen mit dem Zentralbereich 203 überspannen die Querfördereinrichtungen 204, 205 eine bestimmte, die Erntebreite 107 bildende Anzahl Reihen 101 der Feldfrüchte 102, und zwar hier je Querfördereinrichtung 204, 205 vier Reihen 101, so dass sich hier eine Erntebreite 107 von neun Reihen 101 ergibt. Die Querfördereinrichtungen 204, 205 sind zum darauf Ablegen und zum Zentralbereich 203 Fördern der von den Erntearbeitern 109 geernteten Feldfrüchte 102 vorgesehen. Jede der Querfördereinrichtungen 204, 205 ist in eine innere Teilfördereinrichtung 240 und eine äußere Teilfördereinrichtung 241 unterteilt. Die inneren Teilfördereinrichtungen 240 sind über Schwenkeinrichtungen 245 am Zentralbereich 203 angelenkt und dadurch einerseits um eine senkrechte Schwenkachse z.B. zum Straßentransport entgegen der Fahrtrichtung 106 einschwenkbar bzw. in eine Ernteposition mit der Fahrtrichtung 106 ausschwenkbar und andererseits um eine waagerechte Schwenkachse schwenkbar, z.B. zum Ausgleichen von Bodenunebenheiten des Feldes beim Erntevorgang. Die äußeren Teilfördereinrichtungen 241 sind über Schwenkeinrichtungen 244 an den inneren Teilfördereinrichtungen 240 angelenkt und dadurch im Wesentlichen nur um eine senkrechte Schwenkachse z.B. zum Straßentransport mit der Fahrtrichtung 106 einschwenkbar bzw. in eine Ernteposition entgegen der Fahrtrichtung 106 ausschwenkbar. Unter jeder der inneren Teilfördereinrichtungen 240 ist je ein Leitrad 267 für die Querfördereinrichtungen 204, 205 angeordnet. Die Leiträder 267 sind wahlweise für einen Straßentransport klappbar oder vereinfacht auch in an den inneren Teilfördereinrichtungen 240 feststehend angebrachten Laufgestellen gelagert.

Jede der äußeren Teilfördereinrichtungen 241 ist mit je einem Förderband 242 ausgebildet, und jede der inneren Teilfördereinrichtungen 240 ist in ein inneres Teilband 248 und ein äußeres Teilband 249 unterteilt, wobei jedes Teilband 248, 249 mit einem gesonderten Förderband 242 ausgebildet ist. Dabei dienen insbesondere die inneren Teilbänder 248 zum Fördern der Feldfrüchte 102 aus den äußeren Teilbändern 249 zum Zentralbereich 203. Bei der Vorrichtung 203 ist der Zentralbereich 203 höher angeordnet als die Querfördereinrichtungen 204, 205, so dass die inneren Teilbänder 248 beim Fördern der Feldfrüchte 102 einen Höhenunterschied überwinden müssen. Dazu sind die inneren Teilbänder 248 entsprechend schräg, d.h. mit einer Steigung, angeordnet. Um dennoch ein sicheres Fördern der Feldfrüchte 102 zu gewährleisten, sind auf den Förderbändern 242 der inneren Teilbänder 248 Förderstege 246 angeordnet, durch die ein Abgleiten der Feldfrüchte 102 sicher verhindert wird.

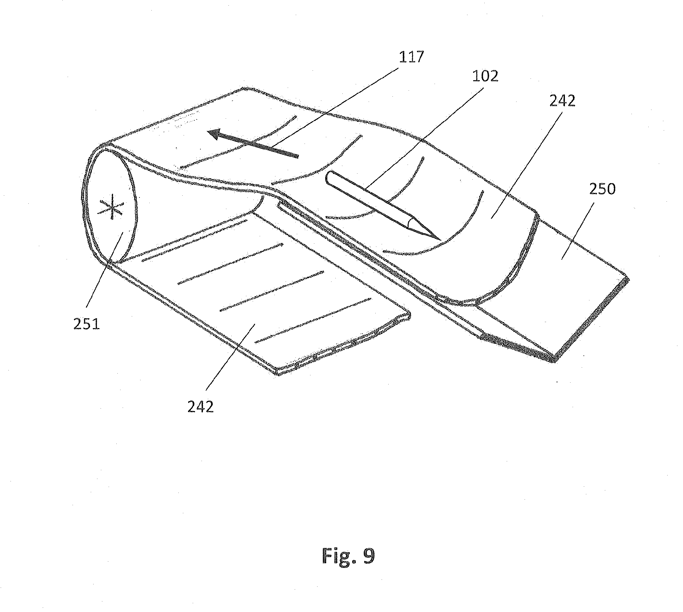

Als Mittel zum Ausrichten der Feldfrüchte 102, hier insbesondere des Spargels, sind die Förderbänder 242 quer zu ihrer Bewegungsrichtung, d.h. quer zur Förderrichtung 117, mit einer rinnenförmigen Einwölbung gestaltet. Dies ist anhand der Figur 9 näher erläutert, die eine grob schematische, perspektivische Darstellung dieser Einwölbung in einer herausgezeichneten Einzelheit des Ausführungsbeispiels der erfindungsgemäßen Vorrichtung 200 gemäß Figuren 7 und 8 zeigt. In einfacher und wirksamer Weise wird die Einwölbung der Förderbänder 242 dadurch erreicht, dass sie entlang der Querfördereinrichtungen 204, 205 auf eingewölbten, hier insbesondere V-förmig eingewölbten, Führungsblechen 250 gleitend gestützt und geführt werden. Die Förderbänder 242 legen sich dann, bedingt durch ihr Gewicht und ihre Biegsamkeit, an die Führungsbleche 250 an und bilden so die Einwölbung. Wahlweise können die Führungsbleche 250 auch gemäß einer abweichenden Kontur, z.B. kreisbogenförmig, eingewölbt sein, oder anstelle der Führungsbleche 250 werden entsprechend eingewölbte Rollengänge eingesetzt. Der Verdeutlichung der endseitigen Führung der Förderbänder 250 halber ist in Figur 9 ferner eine Umlenkrolle 251 wiedergegeben. Die Führungsbleche 250 enden in einem Abstand vor den endseitigen Umlenkrollen 251, der entsprechend der Biegsamkeit der Förderbänder 242 sowie so bemessen ist, dass auch innerhalb dieses Abstands ein sicheres Ausrichten bzw. Ausgerichtetbleiben der Feldfrüchte 102 gewährleistet ist.

Die gemäß den Figuren 7 bis 9 ausgebildete Vorrichtung für ist auf eine händische Verarbeitung der Feldfrüchte 102 ausgebildet. Sie umfasst zu jeder der Querfördereinrichtungen 204, 205 je eine Weiterverarbeitungsvorrichtung 210, die zum einfachen und bequemen Ausführen der Weiterverarbeitungsvorgänge für die Feldfrüchte 102 mit je einer Sammeleinrichtung 252, je einer Wascheinrichtung 211, je einer Sortiereinrichtung 215 und je einer Verpackungseinrichtung 216 ausgestaltet ist. Jede der Sammeleinrichtungen 252 ist hier mit zwei Sammelmulden ausgebildet, die wahlweise unter obere Enden des zugehörigen Inneren Teilbandes 248 verbringbar, z.B. verschiebbar, einsetzbar, einhängbar oder dergleichen, sind und zum Auffangen und Sammeln der über das betreffende innere Teilband 248 geförderten Feldfrüchte dienen. An jede der Sammeleinrichtungen 252 schließt sich eine der Wascheinrichtungen 211 an. Auch diese sind bei der Vorrichtung 200 sehr einfach mit je einem becken- oder kastenartigen Waschgefäß ausgebildet, in dem eine Waschflüssigkeit 122, bevorzugt reines Wasser, besonders bevorzugt kaltes Wasser, vorhaltbar ist, in der die Feldfrüchte durch Eintauchen, bevorzugt kurzzeitiges Eintauchen, gereinigt werden können. An jede der Wascheinrichtungen 211 schließt sich eine der Sortiereinrichtungen 215 an. Diese ist in sehr einfacher Weise mit einer Haltevorrichtung mit pultartigen Auflagen für Behältnisse 228 ausgebildet, in die die Feldfrüchte 102 nach dem Waschen abgelegt werden können und in die sie weiterhin sortierbar sind, z.B. nach Größe oder, insbesondere bei Spargel, nach Durchmesser. Die Behältnisse 228 dienen dabei bevorzugt zugleich als Kästen 229 für eine Verpackung zum weiteren Transport der Feldfrüchte 102, d.h. bei der Vorrichtung 200 werden die Feldfrüchte 102 bevorzugt ohne weiteren, zusätzlichen Verpackungsvorgang beim Sortieren unmittelbar in die Kästen 229 für den Transport gefüllt. Damit bildet die vorgenannte Haltevorrichtung insbesondere mit einer letzten der pultartigen Auflagen zugleich die zugehörige Verpackungseinrichtung 216. An diese kombinierte Sortier- und Verpackungseinrichtung 215, 216 schließt sich ein Zwischenlager 253 für die in den Kästen 229 verpackten Feldfrüchte 102 an, das bei der Vorrichtung 200 in einfacher Weise durch eine Abstellfläche für eine Palette 161 gebildet ist. Die Kästen werden zum Zwischenlagern und für den Abtransport auf der Palette 161 abgestellt. Vom Zwischenlager 253 kann die Palette 161 entweder bevorzugt insgesamt mit einem Gabelhubgerät entladen werden, angedeutet durch einen Pfeil 247, oder die Kästen 229 sind einzeln entnehmbar. Die Abstellfläche für die Palette 161 ist dazu von beiden Seiten der Vorrichtung her frei zugänglich angeordnet.

Mit der Vorrichtung 200 stellt sich der gesamte Erntevorgang in der Weise dar, dass die Feldfrüchte 102, hier insbesondere Spargel, von den Feldarbeitern 109 händisch geerntet und auf die Förderbänder 242 gelegt werden. Auf diesen Förderbändern 242 erfolgt durch deren Einwölbung auch dann eine selbsttätige Ausrichtung in Förderrichtung 117, wenn das Auflegen durch die Erntearbeiter nicht exakt vorgenommen wird. Über die motorisch betriebenen Förderbänder 242 gelangen die Feldfrüchte 102 selbsttätig in die Sammeleinrichtungen 252. Von dort werden sie händisch entnommen, in den Wascheinrichtungen 211 gewaschen, d.h. durch kurzes Eintauchen in die Waschflüssigkeit 122 abgespült, und in Kästen 228 abgelegt. Aus diesen Kästen 228, in denen die Feldfrüchte 102 ggf. eine kurze Zeitspanne zum Ablaufen anhaftender Waschflüssigkeit verbleiben können, werden die Feldfrüchte 102 zum Zweck des Sortierens wiederum händisch entnommen und nach bestimmten Sortierkriterien, z.B. Größe, Durchmesser oder Güteklasse, auf weitere Kästen 228, 229 verteilt und damit zugleich verpackt. Abschließend werden die gefüllten Kästen 229 im Zwischenlager 253 zum Abtransport 247 bereitgestellt.

Bei der Vorrichtung 200 sind somit lediglich die Förderbänder 242 motorisch betrieben. Damit ist in vorteilhafter Weise lediglich ein Anschluss an ein elektrisches Bordnetz des Zugfahrzeugs, wie z.B. der Anschluss 139 im Ausführungsbeispiel nach den Figuren 1 bis 6, für eine Energieversorgung der Vorrichtung 200 ausreichend. Damit ist ein einfacher Anschluss bzw. eine einfache Kopplung mit dem Zugfahrzeug ermöglicht.

### Bezugszeichenliste

- 100: Vorrichtung zum Ernten von Feldfrüchten
- 101: Reihe von Feldfrüchten
- 102: Feldfrüchte bzw. Erntegut; hier: Spargelstangen
- 103: Arbeitsplattform: Zentralbereich von 100
- 104: Querfördereinrichtung von 100
- 105: Querfördereinrichtung von 100
- 106: Fahrtrichtung von 100, 200 während des Erntevorgangs
- 107: Erntebreite
- 108: Ackerschlepper
- 109: Erntearbeiter
- 110: Weiterverarbeitungsvorrichtung von 100
- 111: Wascheinrichtung von 100
- 112: Vorwascheinheit
- 113: Hauptwascheinheit
- 114: Schneideeinrichtung
- 115: Sortiereinrichtung von 110
- 116: Verpackungseinrichtung von 100 bzw. 110
- 117: Pfeile: Förderrichtung der Förderung von 102 durch 104, 105 bzw. 204, 205
- 118: Waschfördereinrichtung
- 119: Förderrichtung von 118
- 120: Sprühdüsen
- 121: Sprüheinrichtung
- 122: Waschflüssigkeit
- 123: Entnahme- und/oder Vereinzelungseinrichtung
- 124: Vorratsbehälter
- 125: Kreislauf für 122
- 126: Abfall, z.B. Spargelschnitt
- 127: Auswerfeinrichtung
- 128: Behältnisse von 115
- 129: Kästen
- 130: Pfeile: Durchlauf von 102 durch 115, 116 bis 129
- 131: Geräteträger von 108
- 132: Hydraulische Hebeeinrichtung von 131
- 133: Rechtes Stützrad
- 134: Linkes Stützrad
- 135: Einstellbewegung von 133, 134
- 136: Kopplungseinrichtung von 100
- 137: Hydraulikanschluss
- 138: Zapfwellenanschluss
- 139: Anschluss an ein elektrisches Bordnetz von 108
- 140: Innere Teilfördereinrichtung: Förderband
- 141: Äußere Teilfördereinrichtung: Förderband
- 142: Pfeile: Verschiebbarkeit 141 gegen 140
- 143: Pfeile: Verschwenkbarkeit 141 gegen 140 bzw. 140 gegen 103
- 144: Drehachse: Verschwenken 141 um 140
- 145: Drehachse: Verschwenken 140 um 103
- 146: Teilung auf 104, 105 als Mittel zum Ausrichten von 102
- 147: Pfeil zum Symbolisieren von Entlademitteln
- 148: Kasten mit 102 zum Symbolisieren von Entlademitteln
- 149: Zwischenlager für 102, insbesondere verpackt in 129
- 150: Schutzmittel für 102: Lichtschutzfolie
- 151: Folienheber
- 152: Übergabeeinrichtung
- 153: Pfeil: symbolisiert Drehung von 102 und Änderung von 117, 119 in 152
- 154: Witterungsschutzeinrichtung
- 155: Sonnenschutzdach von 140
- 156: Sonnenschutzdach von 141
- 157: Sonnenschutzdach von 103
- 158: Stütze für 155, 156, 157
- 159: Kühlvorrichtung
- 160: Kälteübertragungsmittel
- 161: Palette
- 162: Beleuchtungseinrichtung
- 163: Beleuchtungseinrichtung
- 164: Beleuchtungseinrichtung
- 165: Beleuchtungseinrichtung
- 166: Lichtmast
- 167: Leitrad für 104, 105

- 200: Vorrichtung zum Ernten von Feldfrüchten
- 203: Zentralbereich von 200
- 204: Querfördereinrichtung
- 205: Querfördereinrichtung
- 210: Weiterverarbeitungsvorrichtung von 200
- 211: Wascheinrichtung von 200
- 215: Sortiereinrichtung von 210
- 216: Verpackungseinrichtung von 200 bzw. 210
- 228: Behältnisse von 215
- 229: Kästen
- 234: Rad von 200
- 236: Zugvorrichtung / Deichsel von 200
- 240: Innere Teilfördereinrichtung
- 241: Äußere Teilfördereinrichtung
- 242: Förderband von 240, d.h. 248, 249, und 241
- 244: Schwenkeinrichtung
- 245: Schwenkeinrichtung
- 246: Förderstege auf 248
- 247: Pfeil zum Symbolisieren des Entladens
- 248: Innere Teilbänder von 240
- 249: Äußere Teilbänder von 240
- 250: Führungsblech für 242, V-förmig
- 251: Umlenkrolle für 242
- 252: Sammeleinrichtung
- 253: Zwischenlager für 102 in 229 auf 161
- 267: Leitrad für 204, 205

- A-A: Schnittlinie
- B-B: Schnittlinie

## Patentansprüche

1. Vorrichtung (100; 200) zum Ernten von im Wesentlichen in Reihen (101) angebauten Feldfrüchten (102), bevorzugt von stangenförmigem Gemüse, besonders bevorzugt von Spargel, umfassend einen Zentralbereich (103), an dem wenigstens eine seitlich vorstehende, eine bestimmte, eine Erntebreite (107) bildende Anzahl der Reihen (101) überspannende, zum darauf Ablegen und zum Zentralbereich (103) Fördern der von Erntearbeitern (109) geernteten Feldfrüchte (102) vorgesehene, insbesondere motorisch betriebene Querfördereinrichtung (104, 105) angeordnet ist, wobei der Zentralbereich (103) wenigstens eine, bevorzugt automatisierte, Weiterverarbeitungsvorrichtung (110; 210) zum, bevorzugt automatischen, Konfektionieren der Feldfrüchte (102) umfasst, wobei die Weiterverarbeitungsvorrichtung (110; 210) wenigstens eine, bevorzugt automatisierte, besonders bevorzugt vollautomatisierte, Wasch- (111; 211) und/oder Schneide- (114) und/oder Sortier- (115; 215) und/oder Verpackungseinrichtung (116; 216), dabei bevorzugt eine, insbesondere automatisierte, wahlweise ein- oder zweistufige, besonders bevorzugt einstufige Wascheinrichtung (111), enthält, und wobei die wenigstens eine Querfördereinrichtung (104, 105) zum Transportieren der Feldfrüchte (102) zu der wenigstens einen, bevorzugt automatisierten, Weiterverarbeitungsvorrichtung (110; 210) ausgebildet ist.

2. Vorrichtung (100) nach Anspruch 1,
**dadurch gekennzeichnet, dass**
die Weiterverarbeitungsvorrichtung (110) mit einer wenigstens eine Hauptwascheinheit (113) umfassenden Wascheinrichtung (111) ausgebildet ist, wobei die wenigstens eine Hauptwascheinheit (113) ausgestaltet ist mit wenigstens einer insbesondere vollautomatischen Waschfördereinrichtung (118) zum Fördern der Feldfrüchte (102) in einer Förderrichtung (119) durch die wenigstens eine Hauptwascheinheit (113) und mit wenigstens einer insbesondere wenigstens eine Sprühdüse umfassenden Sprüheinrichtung (121) zum Reinigen der Feldfrüchte (102) durch Absprühen mit einer Waschflüssigkeit (122), insbesondere Wasser, aus wenigstens einer Richtung, insbesondere von oben und/oder unten, in Bezug auf die Förderrichtung (119) der wenigstens einen Waschfördereinrichtung (118), und wobei die Wascheinrichtung (111) wahlweise zweistufig mit weiterhin einer Vorwascheinheit (112) ausgebildet ist.

3. Vorrichtung (100) nach Anspruch 2,
**dadurch gekennzeichnet, dass**
die Weiterverarbeitungsvorrichtung (110) ausgebildet ist zum Konfektionieren der Feldfrüchte (102), insbesondere des stangenförmigen Gemüses, mit, insbesondere in dieser Reihenfolge,
• wahlweise der wenigstens einen Vorwascheinheit (112) zum Vorwaschen oder wenigstens einer Übergabeeinrichtung (152) zum Fördern der Feldfrüchte (102) von der wenigstens einen Querfördereinrichtung (104, 105) auf die wenigstens eine Waschfördereinrichtung (118), wobei die Übergabeeinrichtung (152) Mittel zum Ändern der Förderrichtung und/oder einer Ausrichtung der Feldfrüchte (102) von der wenigstens einen Querfördereinrichtung (104, 105) auf die wenigstens eine Waschfördereinrichtung (118) aufweist,
• der wenigstens einen Schneideeinrichtung (114) zum Schneiden,
• der wenigstens einen Hauptwascheinheit (113) zum Hauptwaschen,
• der wenigstens einen Sortiereinrichtung (115) zum Sortieren und
• bevorzugt der wenigstens einen Verpackungseinrichtung (116) zum Verpacken.

4. Vorrichtung (200) nach Anspruch 1,
**dadurch gekennzeichnet, dass**
die Weiterverarbeitungsvorrichtung (210) ausgebildet ist zum Konfektionieren der Feldfrüchte (102), insbesondere des stangenförmigen Gemüses, mit, insbesondere in dieser Reihenfolge,
• wenigstens einer Sammeleinrichtung (252) zum Sammeln der von der wenigstens einen Querfördereinrichtung (204, 205) geförderten Feldfrüchte (102) und/oder Bereitstellen der Feldfrüchte (102) an die Wasch- (211) und/oder Sortier- (215) und/oder Verpackungseinrichtung (216),
• der wenigstens einen Wascheinrichtung (211) zum Waschen, insbesondere zum Hauptwaschen als einzigem Waschen,
• der wenigstens einen Sortiereinrichtung (215) zum Sortieren und
• bevorzugt der wenigstens einen Verpackungseinrichtung (216) zum Verpacken.

5. Vorrichtung (100; 200) nach einem oder mehreren der vorhergehenden Ansprüche,
**gekennzeichnet durch**
eine nicht-selbstfahrende Ausbildung, insbesondere als Anbau- und/oder Anhängeeinrichtung zum Anbau und/oder Anhängen an ein Motorfahrzeug, bevorzugt ein Schleppfahrzeug, insbesondere einen landwirtschaftlichen Schlepper (108).

6. Vorrichtung (100; 200) nach Anspruch 5,
**gekennzeichnet durch**
eine Kopplungseinrichtung (136) mit einer Energieabgabevorrichtung, vorzugsweise einer hydraulischen und/oder mechanischen Energieabgabevorrichtung, des Motorfahrzeugs (108), insbesondere eine Kopplungseinrichtung (136) mit einem Hydraulikkreis (137) und/oder einer Zapfwelle (138) des Motorfahrzeugs (108), zum Übertragen von Antriebsenergie vom Motorfahrzeug (108) wenigstens auf die Querfördereinrichtung (104, 105) und/oder die Weiterverarbeitungsvorrichtung (110).

7. Vorrichtung (100; 200) nach einem oder mehreren der vorhergehenden Ansprüche,
**gekennzeichnet durch**
eine veränderbare, an die **durch** Erntebedingungen der Feldfrüchte (102) beeinflusste Erntebreite (107) anpassbare Längsabmessung der wenigstens einen Querfördereinrichtung (104, 105), wobei insbesondere die wenigstens eine Querfördereinrichtung (104, 105) zwei oder mehrere Teilfördereinrichtungen (140, 141) umfasst, die gegeneinander und/oder gegenüber dem Zentralbereich (103) verschiebbar, insbesondere im Wesentlichen längs einer Förderrichtung (117) der wenigstens einen Querfördereinrichtung (104, 105) verschiebbar (142), und/oder verschwenkbar (143), insbesondere um wenigstens eine im Wesentlichen quer zur Förderrichtung (117) der wenigstens einen Querfördereinrichtung (104, 105) verlaufende, besonders bevorzugt um eine bezüglich einer Betriebsstellung der wenigstens einen Querfördereinrichtung (104, 105) im Wesentlichen waagerechte und/oder senkrechte Drehachse (144, 145) verschwenkbar, ausgebildet sind, und wobei weiter bevorzugt mechanische und/oder hydraulische Antriebsmittel zum Ausführen des Verschiebens (142) und/oder Verschwenkens (143) vorgesehen sind.

8. Vorrichtung (100; 200) nach einem oder mehreren der vorhergehenden Ansprüche,
**dadurch gekennzeichnet, dass**
die wenigstens eine Querfördereinrichtung (104, 105) mit Mitteln zum Ausrichten der geernteten Feldfrüchte (102) ausgebildet ist, wobei insbesondere die Mittel zum Ausrichten der geernteten Feldfrüchte (102) ausgebildet sind:
• mit wenigstens einem Anschlag, an den die Feldfrüchte (102) in definierter Lage anlegbar sind, und/oder
• mit einer Teilung (146) in Aufnahmebereiche, wobei bevorzugt jeder der Aufnahmebereiche zum Aufnehmen und/oder Ausrichten der Feldfrüchte (102) in die definierte Lage ausgebildet ist, und/oder
• mit einer, insbesondere einer rinnenförmigen, Einwölbung der wenigstens einen Querfördereinrichtung (104, 105) im Wesentlichen quer zu einer Förderrichtung (117) der Feldfrüchte (102) entlang der wenigstens einen Querfördereinrichtung (104, 105).

9. Vorrichtung (100; 200) nach Anspruch 2, 3 oder 4 oder nach einem oder mehreren der Ansprüche 5 bis 8 in Verbindung mit Anspruch 2 oder 3, **gekennzeichnet durch**
zwei nach zwei im Wesentlichen gegensätzlichen Richtungen vom Zentralbereich (103) aus sich erstreckende Querfördereinrichtungen (104, 105), an die sich in der Weiterverarbeitungsvorrichtung (110; 210) je wenigstens eine der wenigstens einen
• Vorwascheinheit (112) oder Übergabeeinrichtung (152) oder Sammeleinrichtung (252) und/oder
• Schneideeinrichtung (114) und/oder
• Wascheinrichtung (211) oder Hauptwascheinheit (113) und/oder
• Sortiereinrichtung (115) und/oder
• Verpackungseinrichtung (116),
bevorzugt in dieser Reihenfolge, anschließt.

10. Vorrichtung (100; 200) nach einem oder mehreren der vorhergehenden Ansprüche,
**dadurch gekennzeichnet, dass**
am Zentralbereich (103) Entlademittel (147, 148), bevorzugt automatisierte Entlademittel, vorgesehen sind zum, bevorzugt automatisierten, Absetzen und/oder Überladen von der Weiterverarbeitungsvorrichtung (110; 210) abgegebener, insbesondere verpackter Feldfrüchte (102), vom Zentralbereich (103), insbesondere von der Weiterverarbeitungsvorrichtung (110; 210), bevorzugt auf ein Transportmittel.

11. Vorrichtung (100; 200) nach einem oder mehreren der vorhergehenden Ansprüche,
**gekennzeichnet durch**
wenigstens eine Einrichtung (151) zum zeit- und/oder abschnittsweisen, automatischen Öffnen und/oder Anheben und/oder Entfernen und/oder Wenden und/oder anschließenden automatischen Wiederaufbringen wenigstens eines zum Überdecken wenigstens einer der Reihen (101) der Feldfrüchte (102) ausgebildeten, insbesondere folienbahnförmigen Schutzmittels (150).

12. Vorrichtung (100; 200) nach einem oder mehreren der vorhergehenden Ansprüche,
**gekennzeichnet durch**
wenigstens eine Witterungsschutzeinrichtung (154), insbesondere Sonnenschutzeinrichtung, zum Schützen der Vorrichtung (100; 200), bevorzugt wenigstens des Zentralbereichs (103) und/oder der wenigstens einen Querfördereinrichtung (104, 105), vor Witterungseinflüssen, insbesondere vor Sonneneinstrahlung, und/oder **durch**
wenigstens eine Beleuchtungseinrichtung (162, 163, 164, 165) zum Beleuchten wenigstens der wenigstens einen Querfördereinrichtung (104, 105) und/oder des Zentralbereichs (103) und/oder wenigstens einiger der im Wesentlichen in Reihen (101) angebauten Feldfrüchte (102).

13. Vorrichtung (100; 200) nach einem oder mehreren der vorhergehenden Ansprüche,
**gekennzeichnet durch**
eine Kühlvorrichtung (159) zum Kühlen der Feldfrüchte, wobei die Feldfrüchte (102) insbesondere wenigstens in wenigstens einer der von der Weiterverarbeitungsvorrichtung (110; 210) umfassten wenigstens einen Wasch- (111) und/oder Schneide- (114) und/oder Sortier- (115) und/oder Verpackungseinrichtung (116) kühlbar sind.

14. Verfahren zum Ernten von im Wesentlichen in Reihen (101) angebauten Feldfrüchten (102), bevorzugt von stangenförmigem Gemüse, besonders bevorzugt von Spargel, insbesondere mit einer Vorrichtung (100; 200) nach einem oder mehreren der vorhergehenden Ansprüche, umfassend die Verfahrensschritte
• Ernten, insbesondere händisches Ernten, der Feldfrüchte (102), bevorzugt der stangenförmigem Gemüse, besonders bevorzugt Stechen von Spargelstangen, und
• Ablegen, insbesondere händisches Ablegen, der geernteten Feldfrüchte (102) auf wenigstens einer Querfördereinrichtung (104, 105),
• Fördern, bevorzugt automatisches Fördern, der geernteten Feldfrüchte (102) durch die wenigstens eine Querfördereinrichtung (104, 105) und wahlweise die wenigstens eine Übergabeeinrichtung (152) zu einer Weiterverarbeitungsvorrichtung (110; 210) und wahlweise Sammeln der von der wenigstens einen Querfördereinrichtung (204, 205) geförderten Feldfrüchte (102) und/oder Bereitstellen der Feldfrüchte (102) durch wenigstens eine Sammeleinrichtung (252) an die Weiterverarbeitungsvorrichtung (110; 210),
• wahlweise in wenigstens einer Vorwascheinheit (112) der Weiterverarbeitungsvorrichtung (110) Vorwaschen, insbesondere automatisches Vorwaschen, der geernteten Feldfrüchte (102),
• in wenigstens einer Schneideeinrichtung (114) der Weiterverarbeitungsvorrichtung (110) Schneiden, insbesondere automatisches Schneiden, der Feldfrüchte (102), und/oder
• in wenigstens einer Hauptwascheinheit (113) der Weiterverarbeitungsvorrichtung (110) Hauptwaschen, insbesondere automatisches Hauptwaschen, der Feldfrüchte (102), und/oder in wenigstens einer Wascheinrichtung (211) Waschen, insbesondere Hauptwaschen als einzigem Waschen, der Feldfrüchte (102), und/oder
• in wenigstens einer Sortiereinrichtung (115; 215) der Weiterverarbeitungsvorrichtung (110; 210) Sortieren, insbesondere automatisches Sortieren, der Feldfrüchte (102), und/oder
• in wenigstens einer Verpackungseinrichtung (116; 216) der Weiterverarbeitungsvorrichtung (110; 210) Verpacken, insbesondere automatisches Verpacken, der Feldfrüchte (102), und
• wahlweise mit einem bevorzugt sich an die Weiterverarbeitungsvorrichtung (110; 210) anschließenden Entlademittel (147, 148) Entladen (247), insbesondere automatisches Entladen, der Feldfrüchte (102),
wobei alle Verfahrensschritte unmittelbar auf einem Feld, auf dem die Feldfrüchte (102) angebaut sind, ausgeführt werden.
